# EUROPEAN PATENT APPLICATION

(11) **EP 4 668 914 A1**
(43) Date of publication of application: **24.12.2025**
(21) Application number: 23921933.0
(22) Date of filing: 16.02.2023
(51) Int. Cl.: H04W 64/00

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Stöckeler, Ferdinand
(86) International application number: PCT/CN2023/076643
(87) International publication number: WO 2024/168779

(57) **Abstract**

Embodiments of the present disclosure provide an information processing method and apparatus, a communication device, and a storage medium. The information processing method is executed by a first node and comprises: sending a DNU indication to a second node, wherein the DNU indication is used for indicating at least one of the following: first information is used for the positioning of a UE or is not used for the positioning of the UE, and the first information is used for the positioning integrity of the UE or is not used for the positioning integrity of the UE.

## Description

### TECHNICAL FIELD

The present disclosure relates to the field of wireless communication technology, and specifically to an information processing method and apparatus.

### BACKGROUND

In a wireless communication network, the positioning technology is introduced. A positioning technology can be used for determining the positioning based on information provided by the network, for example, based on information provided by a core network element, or based on information provided by a base station and a user equipment (UE).

### SUMMARY

Embodiments of the present disclosure provide an information processing method and apparatus, a communication device and a storage medium.

According to a first aspect of the embodiments of the present disclosure, there is provided an information processing method, which is performed by a first node, including:
sending a do-not-use (DNU) indication to a second node, in which the DNU indication indicates at least one of:
first information being used for UE positioning or not used for the UE positioning; or
first information being used for a positioning integrity of a UE or not used for the positioning integrity of the UE.

In some embodiments, the first node is a location management function (LMF), the second node is the UE, and the first information includes: assistance information.

In some embodiments, the assistance information comprises at least one of:
a location of a transmission reception point (TPR);
synchronization information between TRPs;
a position reference signal (PRS) resource; or
a TRP identifier.

In some embodiments, the DNU indication indicating that the first information is used for the UE positioning comprises: the DNU indication indicating that a PRS is measured using the assistance information, and/or the DNU indication indicating that a location of the UE is determined using a measurement result, wherein the measurement result is obtained by measuring a PRS using the assistance information;
or
the DNU indication indicating that the first information is not used for the UE positioning comprises: the DNU indication indicating that a PRS is not measured using the assistance information, and/or the DNU indication indicating that a location of the UE is not determined using a measurement result.

In some embodiments, the DNU indication indicating that the first information is used for the positioning integrity of the UE comprises: the DNU indication indicating that the UE uses the assistance information to measure a PRS for the positioning integrity, and/or the DNU indication indicating that the UE uses a measurement result obtained by measuring a PRS using the assistance information for the positioning integrity;
or
the DNU indication indicating that the first information is not used for the positioning integrity of the UE comprises: the DNU indication indicating that the UE does not use the assistance information to measure a PRS for the positioning integrity, and/or the DNU indication indicating that the UE does not use a measurement result obtained by measuring a PRS using the assistance information for the positioning integrity.

In some embodiments, the method further comprises: receiving second information sent by a base station (gNB), wherein the second information is used by the LMF to determine the DNU indication.

In some embodiments, before receiving the second information sent by the base station, the method further comprises: sending a first request to the base station, wherein the first request is used to request the second information.

In some embodiments, the method further comprises: receiving first capability information sent by the UE, wherein the first capability information indicates a capability of supporting the DNU indication for the assistance information.

In some embodiments, the first node is the UE or a base station, the second node is an LMF, and the first information comprises: a measurement result and/or information related to the base station.

In some embodiments, the first node is the UE, and the measurement result comprises at least one of:
a reference signal time difference (RSTD);
a reference signal receiving power (RSRP);
a reference signal receiving power path (RSRPP); or
a UE transmit-receive (Rx-Tx) time difference.

In some embodiments, the DNU indication indicating that the first information is used for the UE positioning comprises: the DNU indication indicating that a location of the UE is determined using the measurement result;
or
the DNU indication indicating that the first information is not used for the UE positioning comprises: the DNU indication indicating that a location of the UE is not determined using the measurement result.

In some embodiments, the DNU indication indicating that the first information is used for the positioning integrity of the UE comprises: the DNU indication indicating that the LMF uses the measurement result for the positioning integrity;
or
the DNU indication indicating that the first information is not used for the positioning integrity of the UE comprises: the DNU indication indicating that the LMF does not use the measurement result for the positioning integrity.

In some embodiments, the method further comprises: sending second capability information to the LMF, wherein the second capability information indicates a capability of supporting the DNU indication for the measurement result.

In some embodiments, the first node is a base station;
the measurement result comprises at least one of: a relative time of arrival (RTOA), an angle of arrival (AoA), a zenith angle of arrival (ZoA), or a gNB Rx-Tx time difference;
   and/or
the information related to the base station comprises at least one of: a location of a TRP, synchronization information between TRPs, or an antenna location of a TRP.

In some embodiments, the DNU indication indicating that the first information is used for the UE positioning comprises: the DNU indication indicating that a location of the UE is determined using the measurement result, and/or the DNU indication indicating that a location of the UE is determined using the information related to the base station;
or
the DNU indication indicating that the first information is not used for the UE positioning comprises: the DNU indication indicating that a location of the UE is not determined using the measurement result, and/or the DNU indication indicating that a location of the UE is not determined using the information related to the base station.

In some embodiments, the DNU indication indicating that the first information is used for the positioning integrity of the UE comprises: the DNU indication indicating that the LMF uses the measurement result for the positioning integrity, and/or the DNU indication indicating that the LMF uses the information related to the base station for the positioning integrity;
or
the DNU indication indicating that the first information is not used for the positioning integrity of the UE comprises: the DNU indication indicating that the LMF does not use the measurement result for the positioning integrity, and/or the DNU indication indicating that the LMF does not use the information related to the base station for the positioning integrity.

In some embodiments, the method further comprises: sending third capability information to the LMF, wherein the third capability information indicates a capability of supporting the DNU indication for the measurement result, and/or the third capability information indicates a capability of supporting the DNU indication for the information related to the base station.

According to a second aspect of embodiments of the present disclosure, there is provide an information processing method, which is performed by a second node, including:
receiving a do-not-use (DNU) indication sent by a first node, in which the DNU indication indicates at least one of:
first information being used for user equipment (UE) positioning or not used for the UE positioning; or
first information being used for a positioning integrity of a UE or not used for the positioning integrity of the UE.

In some embodiments, the first node is a location management function (LMF), the second node is the UE, and the first information includes: assistance information.

In some embodiments, the assistance information comprises at least one of:
a location of a transmission reception point (TPR);
synchronization information between TRPs;
a position reference signal (PRS) resource; or
a TRP identifier.

In some embodiments, the DNU indication indicating that the first information is used for the UE positioning comprises: the DNU indication indicating that a PRS is measured using the assistance information, and/or the DNU indication indicating that a location of the UE is determined using a measurement result, wherein the measurement result is obtained by measuring a PRS using the assistance information;
or
the DNU indication indicating that the first information is not used for the UE positioning comprises: the DNU indication indicating that a PRS is not measured using the assistance information, and/or the DNU indication indicating that a location of the UE is not determined using a measurement result.

In some embodiments, the DNU indication indicating that the first information is used for the positioning integrity of the UE comprises: the DNU indication indicating that the UE uses the assistance information to measure a PRS for the positioning integrity, and/or the DNU indication indicating that the UE uses a measurement result obtained by measuring a PRS using the assistance information for the positioning integrity;
or
the DNU indication indicating that the first information is not used for the positioning integrity of the UE comprises: the DNU indication indicating that the UE does not use the assistance information to measure a PRS for the positioning integrity, and/or the DNU indication indicating that the UE does not use a measurement result obtained by measuring a PRS using the assistance information for the positioning integrity.

In some embodiments, the method further comprises: sending first capability information to an LMF, wherein the first capability information indicates a capability of supporting the DNU indication for the assistance information.

In some embodiments, the method further comprises at least one of:
determining, according to the DNU indication, to use a measurement result of a TRP to determine the UE positioning or not to use a measurement result of a TRP to determine the UE positioning;
determining, according to the DNU indication, to use a measurement result of a TRP to determine the positioning integrity of the UE or not to use a measurement result of a TRP to determine the positioning integrity of the UE;
determining, according to the DNU indication, to use a measurement result of a PRS resource to determine a location of the UE or not to use a measurement result of a PRS resource to determine a location of the UE; or
determining, according to the DNU indication, to use a measurement result of a PRS resource to determine the positioning integrity of the UE or not to use a measurement result of a PRS resource to determine the positioning integrity of the UE.

In some embodiments, the method further comprises at least one of:
determining, according to the DNU indication, at least one TRP used for measurement or at least one TRP not used for measurement; or
determining, according to the DNU indication, at least one PRS resource used for measurement or at least one PRS resource not used for measurement.

In some embodiments, the first node is the UE or a base station, the second node is an LMF, and the first information includes: a measurement result and/or information related to the base station.

In some embodiments, the first node is the UE, and the measurement result comprises at least one of:
a reference signal time difference (RSTD);
a reference signal receiving power (RSRP);
a reference signal receiving power path (RSRPP); or
a UE transmit-receive (Rx-Tx) time difference.

In some embodiments, the DNU indication indicating that the first information is used for the UE positioning comprises: the DNU indication indicating that a location of the UE is determined using the measurement result;
or
the DNU indication indicating that the first information is not used for the UE positioning comprises: the DNU indication indicating that a location of the UE is not determined using the measurement result.

In some embodiments, the DNU indication indicating that the first information is used for the positioning integrity of the UE comprises: the DNU indication indicating that the LMF uses the measurement result for the positioning integrity;
or
the DNU indication indicating that the first information is not used for the positioning integrity of the UE comprises: the DNU indication indicating that the LMF does not use the measurement result for the positioning integrity.

In some embodiments, the method further comprises: receiving second capability information sent by the UE, wherein the second capability information indicates a capability of supporting the DNU indication for the measurement result.

In some embodiments, the first node is a base station;
the measurement result comprises at least one of: a relative time of arrival (RTOA), an angle of arrival (AoA), a zenith angle of arrival (ZoA), or a gNB Rx-Tx time difference;
   and/or
the information related to the base station comprises at least one of: a location of a TRP, synchronization information between TRPs, or an antenna location of a TRP.

In some embodiments, the DNU indication indicating that the first information is used for the UE positioning comprises: the DNU indication indicating that a location of the UE is determined using the measurement result, and/or the DNU indication indicating that a location of the UE is determined using the information related to the base station;
or
the DNU indication indicating that the first information is not used for the UE positioning comprises: the DNU indication indicating that a location of the UE is not determined using the measurement result, and/or the DNU indication indicating that a location of the UE is not determined using the information related to the base station.

In some embodiments, the DNU indication indicating that the first information is used for the positioning integrity of the UE comprises: the DNU indication indicating that the LMF uses the measurement result for the positioning integrity, and/or the DNU indication indicating that the LMF uses the information related to the base station for the positioning integrity;
or
the DNU indication indicating that the first information is not used for the positioning integrity of the UE comprises: the DNU indication indicating that the LMF does not use the measurement result for the positioning integrity, and/or the DNU indication indicating that the LMF does not use the information related to the base station for the positioning integrity.

In some embodiments, the method further comprises: receiving third capability information sent by the base station, wherein the third capability information indicates a capability of supporting the DNU indication for the measurement result, and/or the third capability information indicates a capability of supporting the DNU indication for the information related to the base station.

In some embodiments, the method further comprises at least one of:
determining, according to the DNU indication, to use at least one measurement result to determine a location of the UE or not to use at least one measurement result to determine a location of the UE;
determining, according to the DNU indication, to use at least one TRP to determine a location of the UE or not to use at least one TRP to determine a location of the UE;
determining, according to the DNU indication, to use at least one measurement result to determine the positioning integrity of the UE or not to use at least one measurement result to determine the positioning integrity of the UE; or
determining, according to the DNU indication, to use at least one TRP to determine the positioning integrity of the UE or not to use at least one TRP to determine the positioning integrity of the UE.

According to a third aspect of embodiments of the present disclosure, there is provide an information processing method, which is performed by a base station, including:
sending second information to a location management function (LMF), in which the second information is used by the LMF to determine a do-not-use (DNU) indication, and the DNU indication indicates at least one of:
first information being used for user equipment (UE) positioning or not used for the UE positioning; or
first information being used for a positioning integrity of a UE or not used for the positioning integrity of the UE.

In some embodiments, before sending the second information to the LMF, the method comprises:
receiving a first request sent by the LMF, wherein the first request is used to request the second information.

According to a fourth aspect of the embodiments of the present disclosure, there is provided a first information processing apparatus, which is performed by a first node, including:
a first sending module, configured to send a do-not-use (DNU) indication to a second node, in which the DNU indication indicates at least one of:
first information being used for UE positioning or not used for the UE positioning; or
first information being used for a positioning integrity of a UE or not used for the positioning integrity of the UE.

In some embodiments, the first node is a location management function (LMF), the second node is the UE, and the first information includes: assistance information.

In some embodiments, the assistance information comprises at least one of:
a location of a transmission reception point (TPR);
synchronization information between TRPs;
a position reference signal (PRS) resource; or
a TRP identifier.

In some embodiments, the DNU indication indicating that the first information is used for the UE positioning comprises: the DNU indication indicating that a PRS is measured using the assistance information, and/or the DNU indication indicating that a location of the UE is determined using a measurement result, wherein the measurement result is obtained by measuring a PRS using the assistance information;
or
the DNU indication indicating that the first information is not used for the UE positioning comprises: the DNU indication indicating that a PRS is not measured using the assistance information, and/or the DNU indication indicating that a location of the UE is not determined using a measurement result.

In some embodiments, the DNU indication indicating that the first information is used for the positioning integrity of the UE comprises: the DNU indication indicating that the UE uses the assistance information to measure a PRS for the positioning integrity, and/or the DNU indication indicating that the UE uses a measurement result obtained by measuring a PRS using the assistance information for the positioning integrity;
or
the DNU indication indicating that the first information is not used for the positioning integrity of the UE comprises: the DNU indication indicating that the UE does not use the assistance information to measure a PRS for the positioning integrity, and/or the DNU indication indicating that the UE does not use a measurement result obtained by measuring a PRS using the assistance information for the positioning integrity.

In some embodiments, the apparatus further comprises a first receiving module, configured to receive second information sent by a base station (gNB), wherein the second information is used by the LMF to determine the DNU indication.

In some embodiments, the first sending module is configured to: send a first request to the base station, wherein the first request is used to request the second information.

In some embodiments, the first receiving module is configured to: receive first capability information sent by the UE, wherein the first capability information indicates a capability of supporting the DNU indication for the assistance information.

In some embodiments, the first node is the UE or a base station, the second node is an LMF, and the first information comprises: a measurement result and/or information related to the base station.

In some embodiments, the first node is the UE, and the measurement result comprises at least one of:
a reference signal time difference (RSTD);
a reference signal receiving power (RSRP);
a reference signal receiving power path (RSRPP); or
a UE transmit-receive (Rx-Tx) time difference.

In some embodiments, the DNU indication indicating that the first information is used for the UE positioning comprises: the DNU indication indicating that a location of the UE is determined using the measurement result;
or
the DNU indication indicating that the first information is not used for the UE positioning comprises: the DNU indication indicating that a location of the UE is not determined using the measurement result.

In some embodiments, the DNU indication indicating that the first information is used for the positioning integrity of the UE comprises: the DNU indication indicating that the LMF uses the measurement result for the positioning integrity;
or
the DNU indication indicating that the first information is not used for the positioning integrity of the UE comprises: the DNU indication indicating that the LMF does not use the measurement result for the positioning integrity.

In some embodiments, the first sending module is configured to: send second capability information to the LMF, wherein the second capability information indicates a capability of supporting the DNU indication for the measurement result.

In some embodiments, the first node is a base station;
the measurement result comprises at least one of: a relative time of arrival (RTOA), an angle of arrival (AoA), a zenith angle of arrival (ZoA), or a gNB Rx-Tx time difference;
   and/or
the information related to the base station comprises at least one of: a location of a TRP, synchronization information between TRPs, or an antenna location of a TRP.

In some embodiments, the DNU indication indicating that the first information is used for the UE positioning comprises: the DNU indication indicating that a location of the UE is determined using the measurement result, and/or the DNU indication indicating that a location of the UE is determined using the information related to the base station;
or
the DNU indication indicating that the first information is not used for the UE positioning comprises: the DNU indication indicating that a location of the UE is not determined using the measurement result, and/or the DNU indication indicating that a location of the UE is not determined using the information related to the base station.

In some embodiments, the DNU indication indicating that the first information is used for the positioning integrity of the UE comprises: the DNU indication indicating that the LMF uses the measurement result for the positioning integrity, and/or the DNU indication indicating that the LMF uses the information related to the base station for the positioning integrity;
or
the DNU indication indicating that the first information is not used for the positioning integrity of the UE comprises: the DNU indication indicating that the LMF does not use the measurement result for the positioning integrity, and/or the DNU indication indicating that the LMF does not use the information related to the base station for the positioning integrity.

In some embodiments, the first sending module is configured to: send third capability information to the LMF, wherein the third capability information indicates a capability of supporting the DNU indication for the measurement result, and/or the third capability information indicates a capability of supporting the DNU indication for the information related to the base station.

According to a fifth aspect of embodiments of the present disclosure, there is provide a second information processing apparatus, including:
a second receiving module, configured to: receive a do-not-use (DNU) indication sent by a first node, in which the DNU indication indicates at least one of:
first information being used for user equipment (UE) positioning or not used for the UE positioning; or
first information being used for a positioning integrity of a UE or not used for the positioning integrity of the UE.

In some embodiments, the first node is a location management function (LMF), the second node is the UE, and the first information includes: assistance information.

In some embodiments, the assistance information comprises at least one of:
a location of a transmission reception point (TPR);
synchronization information between TRPs;
a position reference signal (PRS) resource; or
a TRP identifier.

In some embodiments, the DNU indication indicating that the first information is used for the UE positioning comprises: the DNU indication indicating that a PRS is measured using the assistance information, and/or the DNU indication indicating that a location of the UE is determined using a measurement result, wherein the measurement result is obtained by measuring a PRS using the assistance information;
or
the DNU indication indicating that the first information is not used for the UE positioning comprises: the DNU indication indicating that a PRS is not measured using the assistance information, and/or the DNU indication indicating that a location of the UE is not determined using a measurement result.

In some embodiments, the DNU indication indicating that the first information is used for the positioning integrity of the UE comprises: the DNU indication indicating that the UE uses the assistance information to measure a PRS for the positioning integrity, and/or the DNU indication indicating that the UE uses a measurement result obtained by measuring a PRS using the assistance information for the positioning integrity;
or
the DNU indication indicating that the first information is not used for the positioning integrity of the UE comprises: the DNU indication indicating that the UE does not use the assistance information to measure a PRS for the positioning integrity, and/or the DNU indication indicating that the UE does not use a measurement result obtained by measuring a PRS using the assistance information for the positioning integrity.

In some embodiments, the apparatus further comprises a second sending module, configured to: send first capability information to an LMF, wherein the first capability information indicates a capability of supporting the DNU indication for the assistance information.

In some embodiments, the apparatus further comprises a processing module, configured to perform at least one of:
determining, according to the DNU indication, to use a measurement result of a TRP to determine the UE positioning or not to use a measurement result of a TRP to determine the UE positioning;
determining, according to the DNU indication, to use a measurement result of a TRP to determine the positioning integrity of the UE or not to use a measurement result of a TRP to determine the positioning integrity of the UE;
determining, according to the DNU indication, to use a measurement result of a PRS resource to determine a location of the UE or not to use a measurement result of a PRS resource to determine a location of the UE; or
determining, according to the DNU indication, to use a measurement result of a PRS resource to determine the positioning integrity of the UE or not to use a measurement result of a PRS resource to determine the positioning integrity of the UE.

In some embodiments, the processing module is further configured to perform at least one of:
determining, according to the DNU indication, at least one TRP used for measurement or at least one TRP not used for measurement; or
determining, according to the DNU indication, at least one PRS resource used for measurement or at least one PRS resource not used for measurement.

In some embodiments, the first node is the UE or a base station, the second node is an LMF, and the first information includes: a measurement result and/or information related to the base station.

In some embodiments, the first node is the UE, and the measurement result comprises at least one of:
a reference signal time difference (RSTD);
a reference signal receiving power (RSRP);
a reference signal receiving power path (RSRPP); or
a UE transmit-receive (Rx-Tx) time difference.

In some embodiments, the DNU indication indicating that the first information is used for the UE positioning comprises: the DNU indication indicating that a location of the UE is determined using the measurement result;
or
the DNU indication indicating that the first information is not used for the UE positioning comprises: the DNU indication indicating that a location of the UE is not determined using the measurement result.

In some embodiments, the DNU indication indicating that the first information is used for the positioning integrity of the UE comprises: the DNU indication indicating that the LMF uses the measurement result for the positioning integrity;
or
the DNU indication indicating that the first information is not used for the positioning integrity of the UE comprises: the DNU indication indicating that the LMF does not use the measurement result for the positioning integrity.

In some embodiments, the second receiving module is configured to: receive second capability information sent by the UE, wherein the second capability information indicates a capability of supporting the DNU indication for the measurement result.

In some embodiments, the first node is a base station;
the measurement result comprises at least one of: a relative time of arrival (RTOA), an angle of arrival (AoA), a zenith angle of arrival (ZoA), or a gNB Rx-Tx time difference;
   and/or
the information related to the base station comprises at least one of: a location of a TRP, synchronization information between TRPs, or an antenna location of a TRP.

In some embodiments, the DNU indication indicating that the first information is used for the UE positioning comprises: the DNU indication indicating that a location of the UE is determined using the measurement result, and/or the DNU indication indicating that a location of the UE is determined using the information related to the base station;
or
the DNU indication indicating that the first information is not used for the UE positioning comprises: the DNU indication indicating that a location of the UE is not determined using the measurement result, and/or the DNU indication indicating that a location of the UE is not determined using the information related to the base station.

In some embodiments, the DNU indication indicating that the first information is used for the positioning integrity of the UE comprises: the DNU indication indicating that the LMF uses the measurement result for the positioning integrity, and/or the DNU indication indicating that the LMF uses the information related to the base station for the positioning integrity;
or
the DNU indication indicating that the first information is not used for the positioning integrity of the UE comprises: the DNU indication indicating that the LMF does not use the measurement result for the positioning integrity, and/or the DNU indication indicating that the LMF does not use the information related to the base station for the positioning integrity.

In some embodiments, the second receiving module is configured to: receive third capability information sent by the base station, wherein the third capability information indicates a capability of supporting the DNU indication for the measurement result, and/or the third capability information indicates a capability of supporting the DNU indication for the information related to the base station.

In some embodiments, the processing module is configured to perform at least one of:
determining, according to the DNU indication, to use at least one measurement result to determine a location of the UE or not to use at least one measurement result to determine a location of the UE;
determining, according to the DNU indication, to use at least one TRP to determine a location of the UE or not to use at least one TRP to determine a location of the UE;
determining, according to the DNU indication, to use at least one measurement result to determine the positioning integrity of the UE or not to use at least one measurement result to determine the positioning integrity of the UE; or
determining, according to the DNU indication, to use at least one TRP to determine the positioning integrity of the UE or not to use at least one TRP to determine the positioning integrity of the UE.

According to a sixth aspect of embodiments of the present disclosure, there is provide a third information processing apparatus, including:
a third sending module, configured to send second information to a location management function (LMF), in which the second information is used by the LMF to determine a do-not-use (DNU) indication, and the DNU indication indicates at least one of:
first information being used for user equipment (UE) positioning or not used for the UE positioning; or
first information being used for a positioning integrity of a UE or not used for the positioning integrity of the UE.

In some embodiments, the apparatus comprises a third receiving module, configured to receive a first request sent by the LMF, wherein the first request is used to request the second information.

According to a seventh aspect of the embodiments of the present disclosure, there is provided a communication device. The communication device comprises a processor, a transceiver, a memory and an executable program stored on the memory and executable by the processor. The processor executes the executable program to perform the method provided in any of the first aspect, the second aspect or the third aspect.

According to an eighth aspect of the embodiments of the present disclosure, a computer storage medium for storing a program executable by a processor is provided. After the program is executed by the processor, the method provided in any of the first aspect, the second aspect or the third aspect is implemented.

The technical solution provided by the embodiments of the present disclosure may have the following beneficial effects.

In the embodiments of the present disclosure, a first node sends a DNU indication to a second node, in which the DNU indication is used to indicate at least one of the following: the first information being used for UE positioning or not used for the UE positioning, and the first information being used for positioning integrity of the UE or not used for positioning integrity of the UE. In this way, the DNU indication may be sent by the first node to the second node to directly indicate whether the first information is used for the UE positioning and/or for positioning integrity of the UE, thereby realizing the function of the DNU indication.

The technical solution provided by the embodiments of the present disclosure should be understood that the above general description and the following detailed description are merely exemplary and explanatory and cannot limit the embodiments of the present disclosure.

### BRIEF DESCRIPTION OF THE DRAWINGS

The accompanying drawings, which are incorporated in and constitute a part of this specification, illustrate embodiments consistent with the present invention, and serve to explain the principles of the embodiments of the present invention together with the description.
FIG. 1 is a schematic diagram of a wireless communication system according to an embodiment of the present disclosure;
FIG. 2 is a flowchart of an information processing method according to an embodiment of the present disclosure;
FIG. 3 is a flowchart of an information processing method according to an embodiment of the present disclosure;
FIG. 4 is a flowchart of an information processing method according to an embodiment of the present disclosure;
FIG. 5 is a flowchart of an information processing method according to an embodiment of the present disclosure;
FIG. 6 is a flowchart of an information processing method according to an embodiment of the present disclosure;
FIG. 7 is a flowchart of an information processing method according to an embodiment of the present disclosure;
FIG. 8 is a flowchart of an information processing method according to an embodiment of the present disclosure;
FIG. 9 is a flowchart of an information processing method according to an embodiment of the present disclosure;
FIG. 10 is a flowchart of an information processing method according to an embodiment of the present disclosure;
FIG. 11 is a flowchart of an information processing method according to an embodiment of the present disclosure;
FIG. 12 is a flowchart of an information processing method according to an embodiment of the present disclosure;
FIG. 13 is a flowchart of an information processing method according to an embodiment of the present disclosure;
FIG. 14 is a flowchart of an information processing method according to an embodiment of the present disclosure;
FIG. 15 is a flowchart of an information processing method according to an embodiment of the present disclosure;
FIG. 16 is a flowchart of an information processing method according to an embodiment of the present disclosure;
FIG. 17 is a flowchart of an information processing method according to an embodiment of the present disclosure;
FIG. 18 is a flowchart of an information processing method according to an embodiment of the present disclosure;
FIG. 19 is a flowchart of an information processing method according to an embodiment of the present disclosure;
FIG. 20 is a flowchart of an information processing method according to an embodiment of the present disclosure;
FIG. 21 is a flowchart of an information processing method according to an embodiment of the present disclosure;
FIG. 22 is a flowchart of an information processing method according to an embodiment of the present disclosure;
FIG. 23 is a flowchart of an information processing method according to an embodiment of the present disclosure;
FIG. 24 is a flowchart of an information processing method according to an embodiment of the present disclosure;
FIG. 25 is a block diagram of a first information processing apparatus according to an embodiment of the present disclosure;
FIG. 26 is a block diagram of a second information processing apparatus according to an embodiment of the present disclosure;
FIG. 27 is a block diagram of a third information processing apparatus according to an embodiment of the present disclosure;
FIG. 28 is a block diagram of a UE according to an embodiment of the present disclosure;
FIG. 29 is a block diagram of a communication device according to an embodiment of the present disclosure.

### DETAILED DESCRIPTION

The technical solution in the embodiments of the present disclosure will be described clearly and completely in combination of the accompanying drawings below. Obviously, the described embodiments are only part of the embodiments of the present disclosure, not all of the embodiments. Based on the embodiments in the present disclosure, all other embodiments obtained by ordinary technicians in this field without making creative work are within the scope of protection of the present disclosure.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of the embodiments of the present disclosure, the first information may also be referred to as the second information, and likewise the second information may be referred to as the first information. Depending on the context, the words "if" and "in a case" used here may be interpreted as "when" or "in response to determining".

In some implementations or embodiments, the terms, such as "A or B", "A and/or B", "at least one of A or B", "A in one case, B in another case", "A in response to one case, B in response to another case", etc. in the present disclosure, may include at least one of the following technical solutions according to the situations: executing A independently of B, that is, A in some implementations or embodiments; executing B independently of A, that is, B in some implementations or embodiments; selectively executing A or B, that is, selecting one from A and B to execute in some implementations or embodiments; executing both A and B, that is, A and B in some implementations or embodiments.

In some implementations or embodiments, "including A", "comprising A", "used to indicate A", and "carrying A" in the present disclosure may be interpreted as directly carrying A or indirectly indicating A.

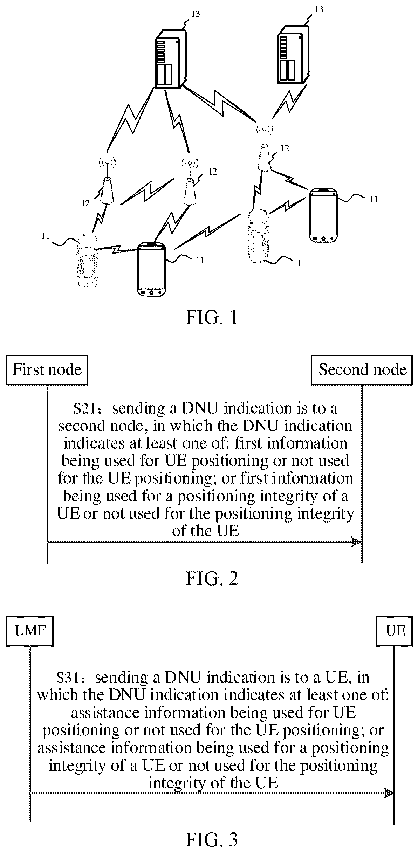

Please refer to FIG. 1, which is a schematic diagram of a wireless communication system according to an embodiment of the present disclosure. As shown in FIG. 1, the wireless communication system is a communication system based on the cellular mobile communication technology, and the wireless communication system may include: a plurality of UEs 11 and a plurality of access devices 12.

The UE 11 may be a device that provides voice and/or data connectivity to users. The UE 11 may communicate with one or more core network nodes via a radio access network (RAN). The UE 11 may be an Internet of Things (IoT) UE, such as a sensor device, a mobile phone (or a "cellular" phone), and a computer with an IoT terminal. For example, it may be a fixed, portable, pocket-sized, handheld, computer-built-in or vehicle-mounted device. For example, it may be a station (STA), a subscriber unit, a subscriber station, a mobile station, a mobile, a remote station, an access point, a remote terminal, an access terminal, a user terminal, a user agent, a user device, or a user (user equipment, UE). Alternatively, the UE 11 may also be a device of an unmanned aerial vehicle (UAV). Alternatively, the UE 11 may also be a vehicle-mounted device, for example, it may be a driving computer with a wireless communication function, or a wireless communication device externally connected to the driving computer. Alternatively, the UE 11 may also be a roadside device, for example, a street lamp, a signal lamp or other roadside devices with a wireless communication function.

The access device 12 may be a network side device in the wireless communication system. The wireless communication system may be a fourth-generation mobile communication (4G) system, also known as a long-term evolution (LTE) system; or the wireless communication system may be a 5G system, also known as a new radio (NR) system or a 5G NR system. Alternatively, the wireless communication system may be a next generation system of the 5G system. The access network in the 5G system may be referred to as new generation-radio access network (NG-RAN). Alternatively, the wireless communication system may be a machine type communication (MTC) system.

The access device 12 may be an evolved access device (eNB) adopted in the 4G system. Alternatively, the access device 12 may also be a base station (gNB) adopting a centralized distributed architecture in the 5G system. When the access device 12 adopts the centralized distributed architecture, it usually includes a central unit (CU) and at least two distributed units (DUs). The central unit is provided with a protocol stack including a packet data convergence protocol (PDCP) layer, a radio link layer control protocol (RLC) layer, and a media access control (MAC) layer; the distributed unit is provided with a protocol stack including a physical (PHY) layer. The specific implementation of the access device 12 is not limited in the embodiments of the present disclosure.

A wireless connection may be established between the access device 12 and the UE 11 via a wireless air interface. In different implementations, the wireless air interface is a wireless air interface based on a fourth generation mobile communication network technology (4G) standard; or the wireless air interface is a wireless air interface based on a fifth generation mobile communication network technology (5G) standard, for example, the wireless air interface is a new radio interface; or the wireless air interface may also be a wireless air interface based on a next generation mobile communication network technology standard of the 5G standard.

In some embodiments, the wireless communication system may further include a core network device 13.

The several access network devices 12 are connected to the core network device 13, respectively. The core network device 13 may be a core network node in the wireless communication system. For example, the core network device 13 may be a mobility management entity (MME) in an evolved packet core (EPC) network. Alternatively, the core network device 13 may also be other core network devices, such as a serving gateway (SGW), a public data network gateway (PGW), a policy and charging rules function (PCRF) or a home subscriber server (HSS), etc. Alternatively, the core network device 13 may also be a core network device in the 5G, for example, a policy control function (PCF), a session management function (SMF), an access and mobility management function (AMF), a unified data management (UDM), a user plane function (UPF), or the like. The implementation form of the core network device 13 is not limited in the embodiments of the present disclosure.

The entities shown in FIG. 1 are examples. The implementations or embodiments of the present disclosure may include all or part of the entities shown in FIG. 1, or may include other entities not shown in FIG. 1. The number of entities is arbitrary and is not limited to FIG. 1. The connection relationships shown in FIG. 1 are also examples. Any entities may be connected or disconnected, and the connection between the entities may be in any manner, which may be a direct or indirect connection, and may be a wired or wireless connection.

The implementations or embodiments of the present disclosure are not exhaustive, but are only illustrative of some implementations or embodiments, and are not intended to be specific limitations on the protection scope of the present disclosure. In the absence of contradiction, each step in a certain implementation or embodiment can be implemented as an independent embodiment, and the steps can be combined arbitrarily. For example, the solution after removing some steps in a certain implementation or embodiment can also be implemented as an independent embodiment, and the order of the steps in a certain implementation or embodiment can be arbitrarily exchanged. In addition, optional ways or optional examples in a certain implementation or embodiment can be combined arbitrarily; in addition, various implementations or embodiments can be combined arbitrarily, for example, some or all steps of different implementations or embodiments can be combined arbitrarily, and a certain implementation or embodiment can be arbitrarily combined with the optional ways or optional examples of other implementations or optional examples.

In order to better understand the technical solution described in any embodiment of the present disclosure, first, UE positioning in the related art is partially explained.

For the positioning technology, positioning integrity is introduced. The positioning integrity may be a measure of trust in an accuracy of location-related data provided by a positioning system, and/or may be a capability to provide timely and effective warnings to LCS customers when the positioning system does not meet predetermined operating conditions.

In an embodiment, the positioning integrity of the Assisted-Global Navigation Satellite System (A-GNSS) positioning technology is proposed. The positioning integrity of the A-GNSS positioning technology only supports UE based positioning integrity. Specifically, a UE reports a protection level (PL) to an LMF. The PL refers to a statistical upper limit of a positioning error (PE), and the PL ensures that within the time exceeding the time-to-Alert (TTA), a true error per unit time is greater than an alert limit (AL), and a probability that the PL is less than or equal to the AL is less than a required target integrity risk (TIR), that is, the PL satisfies the following inequality: the probability per unit time [((PE)AL)&(PL<=AL)) is longer than TTA] <the required TIR.

When PL defines the positioning error in a horizontal plane or a vertical axis, it is called a horizontal protection level (HPL) or a vertical protection level (VPL), respectively. The relevant concepts can be described as follows.

TIR: the positioning error exceeds the alarm limit (AL) without alerting the user within the required time-to-Alert (TTA). TIR is usually defined as the probability per unit time (e.g., per hour, per second, or per independent sample).

AL: a maximum permissible positioning error that enables the positioning system to be used for an intended application. If the positioning error exceeds the AL range, the positioning system should be declared unusable in the intended application to avoid loss of positioning integrity. When the AL limits the positioning error in the horizontal plane or the vertical axis, it is called a horizontal alarm limit (HAL) or a vertical alarm limit (VAL), respectively.

TTA: a maximum permissible time from a time when the positioning error exceeds the AL to a time when a function providing positioning integrity issues a corresponding alarm.

In an embodiment, in global navigation satellite system (GNSS) positioning integrity, the network provides assistance information to the UE and indicates whether an indication information is available (DNU). Specifically, the following method may be used in the protocol to indicate:

GNSS-Integrity-ServiceAlert (i.e., GNSS-Integrity-Service Alert):
The IE GNSS-Integrity-ServiceAlert is used by the location server to indicate whether the corresponding assistance data can be used for integrity related applications (i.e., the GNSS-Integrity-ServiceAlert is used to indicate that the UE cannot use certain assistance information for implementation of positioning integrity). The following will be illustrated by the example in Table 1:

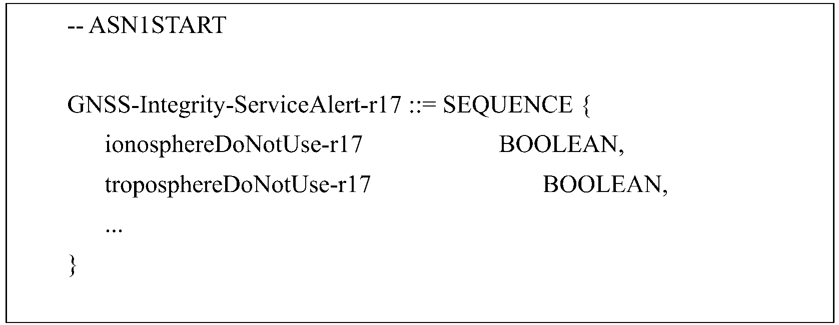

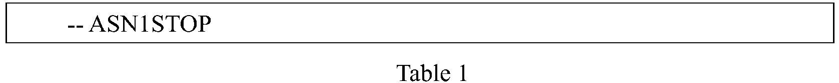

In addition, the network also uses GNSS-Real Time Integrity (GNSS-RealTimeIntegrity) to indicate to the UE which satellites have poor signals, that is, satellites having poor signals cannot be used for implementation of positioning integrity.

In an embodiment, it is also determined that a DNU indication is introduced for the RAT-dependent positioning integrity. Compared with only standardizing the UE-based positioning integrity, this embodiment standardizes the LMF-based positioning integrity and the UE-based positioning integrity. Further, considering that the assistance information provided by the network may be used for the UE positioning, but the assistance information provided by the network cannot be used for the positioning integrity, it is required to determine how to implement the function of the DNU indication, etc.

As shown in FIG. 2, an embodiment of the present disclosure provides an information processing method, which is performed by a first node, including the following step.

At step S21, a DNU indication is sent to a second node, in which the DNU indication indicates at least one of: first information being used for UE positioning or not used for the UE positioning; or first information being used for a positioning integrity of a UE or not used for the positioning integrity of the UE.

The first node and the second node involved in the embodiments of the present disclosure may be logical nodes or functionalities that can be flexibly deployed in a communication network. For example, the first node is an LMF and the second node is a UE. For example, the first node is a UE or a base station and the second node is an LMF. For example, the LMF may be a logical node or functionality that can be flexibly deployed in a core network. For example, the UE may be, but is not limited to, a mobile phone, a computer, a server, a wearable device, a game control platform or a multimedia device. For example, the base station may be, but is not limited to, various types of base stations, such as, the base station may be, but is not limited to, at least one of the following: a 3G base station, a 4G base station, a 5G base station and other evolved base stations.

In an embodiment, transmission between the UE and the LMF may be direct or indirect; for example, if the transmission between the UE and the LMF is indirect, the UE and the LMF may perform the transmission via a base station.

In an embodiment, the DNU indication may be replaced by indication information. For example, the first node sends the indication information to the second node, in which the indication information indicates at least one of the following: the first information being used for the UE positioning or not used for the UE positioning; or the first information being used for the positioning integrity of the UE or not used for the positioning integrity of the UE.

In an embodiment, the first information being used for the UE positioning includes at least one of the following: using the first information to measure a position reference signal (PRS), using a measurement result to determine a location of the UE, or using the first information to determine a location of the UE. The measurement result is obtained by the UE measuring the PRS using the first information.

In an embodiment, the first information being not used for the UE positioning includes at least one of the following: not using the first information to measure a PRS, not using a measurement result to determine a location of the UE, or not using the first information to determine a location of the UE. The measurement result is obtained by the UE measuring the PRS using the first information.

In an embodiment, the first information being used for the positioning integrity of the UE includes at least one of the following: the UE using the first information to measure a PRS for the positioning integrity, the UE using a measurement result obtained by measuring a PRS using the first information for the positioning integrity, the LMF using the first information for the positioning integrity, or the UE using the first information for the positioning integrity.

In an embodiment, the first information being not used for the positioning integrity of the UE includes at least one of the following: the UE not using the first information to measure a PRS for the positioning integrity, the UE not using a measurement result obtained by measuring a PRS using the first information for the positioning integrity, the LMF not using the first information for the positioning integrity, or the LMF not using the first information during the UE positioning.

In an embodiment, sending the DNU indication to the second node in step S21 includes: sending an LTE positioning protocol (LPP) message to the second node, in which the LPP message carries the DNU indication. In this way, the DNU indication may be carried by the LPP message for sending, and two functions may be realized by one LPP message, namely, realizing an original positioning-related function of the LPP message and sending the DNU indication. In this way, no additional signaling or message carrying the DNU indication is required, thereby reducing the signaling overhead.

Thus, in this embodiment of the present disclosure, the function of the DNU indication may be implemented by the first node sending the DNU indication to the second node to directly indicate whether the first information is used for the UE positioning and/or for the positioning integrity of the UE.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

In an embodiment, the first node is an LMF, the second node is a UE, and the first information includes: assistance information.

As shown in FIG. 3, an embodiment of the present disclosure provides an information processing method, which is performed by an LMF, including the following step.

At step S31, a DNU indication is sent to a UE, in which the DNU indication indicates at least one of: assistance information being used for UE positioning or not used for the UE positioning; or assistance information being used for a positioning integrity of the UE or not used for the positioning integrity of the UE.

In some embodiments of the present disclosure, the DNU indication may be the DNU indication in step S21. The DNU indication may be replaced by indication information.

In some embodiments of the present disclosure, the assistance information includes at least one of:
a location of a transmission reception point (TPR);
synchronization information between TRPs;
a TRP identifier;
a position reference signal (PRS) resource; or
beam information of a PRS.

For example, the location of the TRP may be a position of one TRP, or positions of multiple TRPs. The location of the TRP may be, but is not limited to, a beam direction where the TRP is located. One TRP may correspond to at least one PRS resource. The TRP identifier may be, but is not limited to, a number or an index number used to identify the TRP. In the embodiments of the present disclosure, at least one refers to one or more; multiple refers to two or more.

For example, the synchronization information between TRPs may be synchronization information between any two TRPs of at least two TRPs. The synchronization information between the TRPs may be: synchronization information between one TRP and another TP. For example, the synchronization information between TRPs may be synchronization information between a first TRP and a second TRP, the first TRP and the second TRP may be located on the same base station, or the first TRP and the second TRP may be located on different base stations. If the first TRP and the second TRP are located on different base stations, the synchronization information between the TRPs may be synchronization information between base stations.

For example, the PRS resource may be one or more PRSs. The PRS resource may be any type of PRS. The PRS resource may be, but is not limited to, a composite PRS or a truncated PRS, etc. The composite PRS resource is sent according to a composite sequence, and the truncated PRS resource is a part of the composite PRS resource and is sent according to a subsequence of the composite sequence. The PRS resource may include a PRS resource set and/or a PRS resource identifier.

For example, the beam information of the PRS may be, but is not limited to, the beam direction where the PRS is located.

In some embodiments, the DNU indication indicating that the first information is used for the UE positioning includes: the DNU indication indicating that a PRS is measured using the assistance information, and/or the DNU indication indicating that a location of the UE is determined using a measurement result, in which the measurement result is obtained by measuring a PRS using the assistance information;
or
the DNU indication indicating that the first information is not used for the UE positioning includes: the DNU indication indicating that a PRS is not measured using the assistance information, and/or the DNU indication indicating that a location of the UE is not determined using a measurement result.

In some embodiments, the DNU indication indicating that the first information is used for the UE positioning may be: the DNU indication indicating that the assistance information is used for the UE positioning; and/or the DNU indication indicating that the first information is not used for the UE positioning may be: the DNU indication indicating that the assistance information is not used for the UE positioning.

In some embodiments, the DNU indication indicating that the first information is used for the positioning integrity of the UE includes: the DNU indication indicating that a PRS is measured using the assistance information for the positioning integrity of the UE, and/or the DNU indication indicating that a measurement result obtained by measuring a PRS using the assistance information is used for the positioning integrity of the UE;
or
the DNU indication indicating that the first information is not used for the positioning integrity of the UE includes: the DNU indication indicating that a PRS is not measured using the assistance information for the positioning integrity of the UE, and/or the DNU indication indicating that a measurement result obtained by measuring a PRS using the assistance information is not used for the positioning integrity of the UE.

In some embodiments, the DNU indication indicating that the first information is used for the positioning integrity of the UE may be: the DNU indication indicating that the assistance information is used for the positioning integrity of the UE; and/or the DNU indication indicating that the first information is not used for the positioning integrity of the UE may be: the DNU indication indicating that the assistance information is not used for the positioning integrity of the UE.

In an embodiment, not using the measurement result obtained by measuring the PRS using the assistance information refers to measuring the PRS but not using the measurement result. For example, the NDU indication indicates that the first information is not used for the positioning integrity of the UE, which can be: the DNU indication indicates that the PRS is measured using the assistance information but not the measurement result obtained by measuring the PRS using the assistance information is not used.

For example, there are 10 TRPs. The LMF may determine, based on positions of the 10 TRPs, that 7 TRPs of the 10 TRPs are used for the UE positioning and the other 3 TRPs of the 10 TRPs are not used for the UE positioning; and/or the LMF may determine, based on positions of the 10 TRPs, that 6 TRPs of the 10 TRPs are used for the positioning integrity of the UE and the other 4 TRPs of the 10 TRPs are not used for the positioning integrity of the UE. In this way, the DNU indication may indicate the UE positioning and/or the positioning integrity of the UE through the above-mentioned content determined by the LMF. For example, the DNU indication may instruct the UE to use a specific TRP or not to use a specific TRP for the UE positioning and/or the positioning integrity of the UE.

For example, there are 10 TRPs. The LMF may determine, based on TRP identifiers of the 10 TRPs, that 8 TRPs of the 10 TRPs are used for the UE positioning and the other 3 TRPs of the 10 TRPs are not used for the UE positioning; and/or the LMF may determine, based on TRP identifiers of the 10 TRPs, that 6 TRPs of the 10 TRPs are used for the positioning integrity of the UE and the other 4 TRPs of the 10 TRPs are not used for the positioning integrity of the UE. In this way, the DNU indication may indicate the UE positioning and/or the positioning integrity of the UE through the above-mentioned content determined by the LMF. For example, the DNU indication may instruct the UE to use a TRP corresponding to a TRP identifier or not to use a TRP corresponding to a TRP identifier for the UE positioning and/or the positioning integrity of the UE.

For example, the DNU indication may instruct the UE to use a PRS sent by a specific TRP or not to use a PRS sent by a specific TRP for the UE positioning and/or the positioning integrity of the UE.

Of course, in other embodiments, the LMF may also determine the content of the DNU indication based on at least one of: the synchronization information between TRPs, the PRS resource, or the beam information of the PRS.

For example, the DNU indication may be sent via an LPP message.

In an embodiment, the assistance information may be provided by the LMF. Of course, in other embodiments, the assistance information may also be obtained from other network elements in the core network or from a base station in the access network, and the acquisition of the assistance information is not limited here. In this way, the assistance information may be obtained in a variety of ways to adapt to more application scenarios.

In this embodiment of the present disclosure, the DNU indication may be sent to the UE by the LMF to implement the function of the DNU indication. For example, the LMF may indicate to the UE whether to use the assistance information to measure the PRS, and/or whether to use the measurement result obtained by measuring the PRS using the assistance information to determine the location of the UE. For another example, the LMF may indicate to the UE whether to use the assistance information to measure the PRS for the positioning integrity, and/or whether to use the measurement result obtained by measuring the PRS using the assistance information for the positioning integrity.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

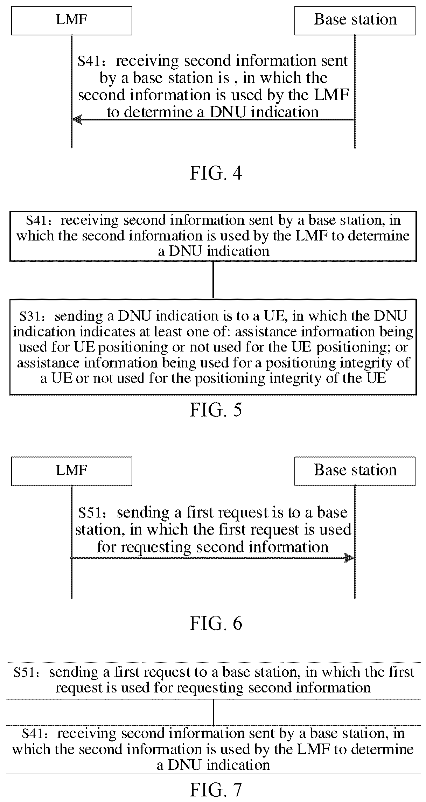

As shown in FIG. 4, an embodiment of the present disclosure provides an information processing method, which is performed by an LMF, including the following step.

At step S41, second information sent by a base station is received, in which the second information is used by the LMF to determine a DNU indication.

In some embodiments of the present disclosure, the DNU indication may be the DNU indication in step S21 or step S31. For example, the DNU indication may be replaced by indication information.

In an embodiment, the second information may include the DNU indication, or the second information may be used to determine the DNU indication.

For example, the second information may include assistance information. After receiving the second information including the assistance information, the LMF determines the DNU indication based on the assistance information.

In some embodiments of the present disclosure, the assistance information may be the assistance information in the above step S31. For example, the assistance information includes at least one of the following: a location of a TRP, synchronization information between TRPs, a TRP identifier, a PRS resource, or beam information of a PRS. For example, the second information indicates that the location of the TRP has changed, or the location of the TRP is unavailable, or the location of the TRP exceeds an error range, or the TRPs are no longer time synchronized, or time synchronization information between the TRPs is no longer available, or the TRP or the PRS sent by the TRP is not suitable for the UE positioning or the positioning integrity of the UE. Here, the DNU indication determined by the second information indicates that the assistance information is not used for the UE positioning and/or the positioning integrity of the UE.

In an embodiment, the second information is sent via an NR positioning protocol A (NRPPa) message. For example, the LMF receives an NRPPa message sent by the base station, and the NRPPa message carries the second information. In this way, by sending the second information via the NRPPa message, no additional signaling or message is required to send the second information, which can reduce the signaling overhead.

Thus, in this embodiment of the present disclosure, the LMF may receive the second information sent by the base station, and may determine the DNU indication based on the second information, so as to implement the function of the DNU indication.

As shown in FIG. 5, an embodiment of the present disclosure provides an information processing method, which is performed by an LMF, including the following step.

At step S41, second information sent by a base station is received, in which the second information is used by the LMF to determine a DNU indication.

At step S31, the DNU indication is sent to a UE, in which the DNU indication indicates at least one of: assistance information being used for UE positioning or not used for the UE positioning; or assistance information being used for a positioning integrity of the UE or not used for the positioning integrity of the UE.

It should be noted that, for the description of the content repeated or corresponding to the aforementioned embodiments, such as the specific implementations of step S31 and step S41 in the embodiments of the present disclosure, reference may be made to the relevant parts of step S31 and step S41 in the aforementioned embodiments respectively, which will be not elaborated herein.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

As shown in FIG. 6, an embodiment of the present disclosure provides an information processing method, which is performed by an LMF, including the following step.

At step S51, a first request is sent to a base station, in which the first request is used for requesting second information.

In some embodiments of the present disclosure, the second information may be the second information in step S41. For example, the second information may include a DNU indication, or the second information may be used to determine the DNU indication, or the second information may include assistance information.

Thus, in this embodiment of the present disclosure, the first request may be sent to the base station via the LMF to obtain the second information.

As shown in FIG. 7, an embodiment of the present disclosure provides an information processing method, which is performed by an LMF, including the following step.

At step S51, a first request is sent to a base station, in which the first request is used for requesting second information.

At step S41, the second information sent by a base station is received, in which the second information is used by the LMF to determine a DNU indication.

It should be noted that, for the description of the content repeated or corresponding to the aforementioned embodiments, such as the specific implementations of step S51 and step S41 in the embodiments of the present disclosure, reference may be made to the relevant parts of step S51 and step S341 in the aforementioned embodiments respectively, which will be not elaborated herein.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

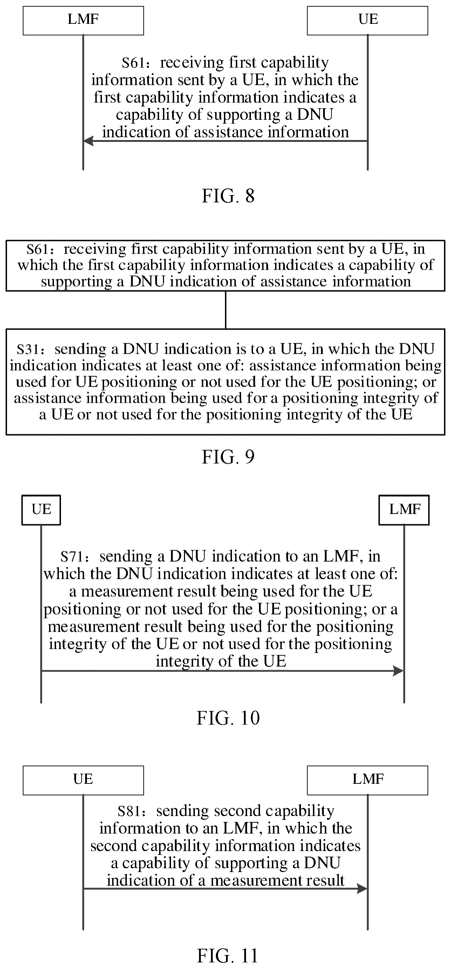

As shown in FIG. 8, an embodiment of the present disclosure provides an information processing method, which is performed by an LMF, including the following step.

At step S61, first capability information sent by a UE is received, in which the first capability information indicates a capability of supporting a DNU indication for assistance information.

In some embodiments of the present disclosure, the DNU indication and the assistance information may be the DNU indication and the assistance information in step S31.

For example, the DNU indication indicates at least one of: the assistance information being used for the UE positioning or not used for the UE positioning; or the assistance information being used for the positioning integrity of the UE or not used for the positioning integrity of the UE.

For example, the assistance information includes at least one of the following: a location of a TRP, synchronization information between TRPs, a TRP identifier, a PRS resource, or beam information of a PRS.

In an embodiment, if the LMF receives the first capability information sent by the UE, and determines that the LMF has a capability of supporting the DNU indication for the assistance information, the LMF sends a DNU indication to the UE, and the DNU indication indicates at least one of the following: the assistance information being used for the UE positioning or not used for the UE positioning; or the assistance information being used for the positioning integrity of the UE or not used for the positioning integrity of the UE.

In this way, the DNU indication may be sent to the UE only when the UE has the capability of supporting the DNU indication for the assistance information, and there is no need to send the DNU indication in real time to indicate a DNU indication function, thereby reducing signaling overhead.

In another embodiment, the first capability information may be used to indicate a capability of supporting the DNU indication for the assistance information, or may be used to indicate a capability of not supporting the DNU indication for the assistance information.

For example, the first capability information may have at least one bit. If the first capability information has a first value, such as "00", it may be used to indicate the capability of supporting the DNU indication for the assistance information; or if the first capability information has a second value, such as "01", it may be used to indicate the capability of not supporting the DNU indication for the assistance information.

In an embodiment, the capability of supporting the DNU indication for the assistance information refers to a capability of supporting use of the DNU indication corresponding to the assistance information; or the capability of not supporting the DNU indication for the assistance information refers to a capability of not supporting use of the DNU indication corresponding to the assistance information.

Thus, in the embodiments of the present disclosure, the capability of supporting or not supporting the DNU indication for the assistance information may be determined through different values of the first capability information.

In an embodiment, the first capability information is sent via an LPP message. For example, the LMF receives an LPP message sent by the UE, in which the LPP message carries the first capability information.

As shown in FIG. 9, an embodiment of the present disclosure provides an information processing method, which is performed by an LMF, including the following step.

At step S61, first capability information sent by a UE is received, in which the first capability information indicates a capability of supporting a DNU indication for assistance information.

At step S31, the DNU indication is sent to the UE, in which the DNU indication indicates at least one of: the assistance information being used for UE positioning or not used for the UE positioning; or the assistance information being used for a positioning integrity of the UE or not used for the positioning integrity of the UE.

It should be noted that, for the description of the content repeated or corresponding to the aforementioned embodiments, such as the specific implementations of step S61 and step S31 in the embodiments of the present disclosure, reference may be made to the relevant parts of step S61 and step S31 in the aforementioned embodiments respectively, which will be not elaborated herein.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

In an embodiment, the first node is the UE, the second node is the LMF, and the first information includes: a measurement result.

As shown in FIG. 10, an embodiment of the present disclosure provides an information processing method, which is performed by a UE, including the following step.

At step S71, a DNU indication is sent to an LMF, in which the DNU indication indicates at least one of: a measurement result being used for the UE positioning or not used for the UE positioning; or a measurement result being used for a positioning integrity of the UE or not used for the positioning integrity of the UE.

In some embodiments of the present disclosure, the DNU indication and the assistance information may be the DNU indication and the assistance information in step S21. The DNU indication may be replaced by indication information.

In some embodiments of the present disclosure, an interaction between the UE and the LMF may be performed via a base station. For example, the UE sends the DNU indication to the LMF, which may be described as follows: the UE sends the DNU indication to the LMF via the base station. The UE sends the DNU indication to the LMF via the base station, which may be described as follows: the UE sends the DNU indication to the base station, and the base station forwards the DNU indication to the LMF. The forwarding may be transparent forwarding. For example, the UE sends the DNU indication to the LMF through an LPP message.

In some embodiments, the measurement result includes at least one of:
a reference signal time difference (RSTD);
a reference signal receiving power (RSRP);
a reference signal receiving power path (RSRPP); or
a UE transmit-receive (Rx-Tx) time difference.

In an embodiment, the RSTD may be a RSTD of a PRS; and/or the RSRP may be a RSRP of a PRS; and/or the RSRPP may be a RSRPP of a PRS.

In an embodiment, the UE Rx-Tx time difference may be a time difference between a time when the UE receives a PRS and a time when the UE sends the uplink. The PRS may be replaced by other positioning signals.

In some embodiments, the DNU indication indicating that the first information is used for the UE positioning includes: the DNU indication indicating that the measurement result is used to determine a location of the UE;
or
the DNU indication indicating that the first information is not used for the UE positioning includes: the DNU indication indicating that the measurement result is not used to determine a location of the UE.

In an embodiment, the DNU indication indicating that the first information is used for the UE positioning may be: the DNU indication indicating that the measurement result is used for the UE positioning; and/or the DNU indication indicating that the first information is not used for the UE positioning may be: the DNU indication indicating that the measurement result is not used for the UE positioning.

In some embodiments, the DNU indication indicating that the first information is used for the positioning integrity of the UE includes: the DNU indication indicating that the measurement result is used by the LMF for the positioning integrity;
or
the DNU indication indicating that the first information is not used for the positioning integrity of the UE includes: the DNU indication indicating that the measurement result is not used by the LMF for the positioning integrity.

In an embodiment, the DNU indication indicating that the first information is used for the positioning integrity of the UE may be: the DNU indication indicating that the measurement result is used for the positioning integrity of the UE; and/or the DNU indication indicating that the first information is not used for the positioning integrity of the UE may be: the DNU indication indicating that the measurement result is not used for the positioning integrity of the UE.

In an embodiment, if at least one of the RSTD, the RSRP, the RSRPP or the UE Rx-Tx time difference satisfies a predetermined threshold range, it is determined that it is used for the UE positioning and/or the positioning integrity of the UE, then the DNU indication indicates that at least one of the RSTD, the PSTE, the RSRP or the UE Rx-Tx time difference is used to determine the location of the UE, and/or that at least one of the RSTD, the PSTE, the RSRP or the UE Rx-Tx time difference is used by the LMF for the positioning integrity.

In another embodiment, if at least one of the RSTD, the RSRP, the RSRPP or the UE Rx-Tx time difference does not satisfy a predetermined threshold range, it is determined that it is not used for the UE positioning and/or the positioning integrity of the UE, then the DNU indication indicates that at least one of the RSTD, the PSTE, the RSRP or the UE Rx-Tx time difference is not used to determine the location of the UE, and/or that at least one of the RSTD, the PSTE, the RSRP or the UE Rx-Tx time difference is not used by the LMF for the positioning integrity.

In an embodiment, the measurement result is associated with a PRS resource, or the measurement result is associated with a TRP, that is, the LMF uses or does not use the measurement result corresponding to a specific PRS resource or the measurement result corresponding to a specific TRP for the UE positioning or the positioning integrity of the UE.

In an embodiment, the measurement result may be provided by the UE.

In the embodiments of the present disclosure, the UE may send the DNU indication to the LMF to implement the function of the DNU indication. For example, the UE may indicate whether the LMF uses the measurement result to determine the location of the UE; or the UE may indicate whether the LMF uses the measurement result for the positioning integrity.

An embodiment of the present disclosure provides an information processing method, which is performed by a UE, including: receiving a second request sent by the LMF, in which the second request is used for requesting the DNU indication.

In an embodiment, sending the DNU indication to the LMF in step S71 includes: sending the DNU indication to the LMF based on the second request.

Thus, in this embodiment of the present disclosure, the UE sends the DNU indication to the LMF only after receiving the second request sent by the LMF. In this way, the DNU indication may be sent only when the LMF has a need, thereby reducing the signaling overhead.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

As shown in FIG. 11, an embodiment of the present disclosure provides an information processing method, which is performed by a UE, including the following step.

At step S81, second capability information is sent to an LMF, in which the second capability information indicates a capability of supporting a DNU indication for a measurement result.

In some embodiments of the present disclosure, the DNU indication and the measurement result may be the DNU indication and the measurement result in step S71.

For example, the DNU indication indicates at least one of: the measurement result being used for the UE positioning or not used for the UE positioning; or the measurement result being used for the positioning integrity of the UE or not used for the positioning integrity of the UE.

For example, the measurement result includes at least one of the RSTD, the RSRP, the RSRPP or the UE Rx-Tx time difference.

In an embodiment, the UE sends the second capability information to the LMF; if the LMF receives the second capability information and determines the capability of supporting the DNU indication for the measurement result, and if the LMF receives the DNU indication and determines, based on the DNU indication, whether to use the measurement result to determine the location of the UE and/or whether to use the measurement result for the positioning integrity.

In this way, the UE may send the second capability information to the LMF to inform the LMF of the capability of supporting the DNU indication for the measurement results, and if the LMF receives the DNU indication, the LMF may implement the function of the DNU indication based on the capability of supporting the DNU indication for the measurement result.

In another embodiment, the second capability information may be used to indicate the capability of supporting the DNU indication for the measurement result, or may be used to indicate the capability of not supporting the DNU indication for the measurement result.

For example, the second capability information may be at least one bit. If the second capability information has a first value, such as "00", it may be used to indicate the capability of supporting the DNU indication for the measurement result; or if the second capability information has a second value, such as "01", it may be used to indicate the capability of not supporting the DNU indication for the measurement result.

Thus, in the embodiments of the present disclosure, the capability of supporting or not supporting the DNU indication for the measurement result may be determined through different values of the second capability information.

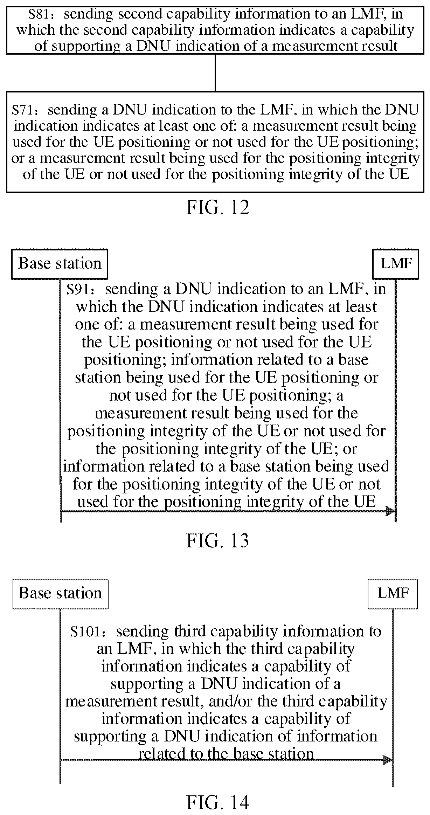

As shown in FIG. 12, an embodiment of the present disclosure provides an information processing method, which is performed by a UE, including the following step.

At step S81, second capability information is sent to an LMF, in which the second capability information indicates a capability of supporting a DNU indication for a measurement result.

At step S71, the DNU indication is sent to the LMF, in which the DNU indication indicates at least one of: a measurement result being used for UE positioning or not used for the UE positioning; or a measurement result being used for a positioning integrity of the UE or not used for the positioning integrity of the UE.

In an optional embodiment, before step S71, the method further includes: receiving a second request sent by the LMF, in which the second request is used for requesting the DNU indication.

It should be noted that, for the description of the content repeated or corresponding to the aforementioned embodiments, such as the specific implementations of step S81 and step S71 in the embodiments of the present disclosure, reference may be made to the relevant parts of step S81 and step S71 in the aforementioned embodiments respectively, which will be not elaborated herein.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

In another embodiment, the first node is the UE, the second node is the LMF, and the first information includes: a measurement result and/or information related to a base station.

As shown in FIG. 13, an embodiment of the present disclosure provides an information processing method, which is performed by a base station, including the following step.

At step S91, a DNU indication is sent to an LMF, in which the DNU indication indicates at least one of: a measurement result being used for the UE positioning or not used for the UE positioning; information related to a base station being used for the UE positioning or not used for the UE positioning; a measurement result being used for positioning integrity of the UE or not used for the positioning integrity of the UE; or information related to a base station being used for positioning integrity of the UE or not used for the positioning integrity of the UE.

In some embodiments of the present disclosure, the DNU indication may be the DNU indication in step S21. The DNU indication may be replaced by indication information.

In some embodiments, the measurement result includes at least one of: a relative time of arrival (RTOA), an angle of arrival (AoA), a zenith angle of arrival (ZoA), or a gNB Rx-Tx time difference;
and/or
the information related to the base station includes at least one of: a location of a TRP, synchronization information between TRPs, or an antenna location of a TRP.

In an embodiment, the ROTA may be a ROTA of a PRS.

In an embodiment, the RTOA may be an uplink relative time of arrival (UL-RTOA). For example, the UL-RTOA may be determined based on a time of the received PRS and a reference time. In an embodiment, the AoA may include an AoA and a ZoA. The AoA is an angle of arrival in the horizontal dimension; the ZoA is an angle of arrival in the vertical dimension.

In an embodiment, the AoA may be an uplink AoA, and/or the ZoA may be an uplink ZoA.

In an embodiment, the gNB Rx-Tx time difference may be a time difference between a time when the gNB receives an uplink sounding reference signal (SRS) and a time when the gNB sends downlink data. The SRS may be replaced by other positioning signals.

In some embodiments of the present disclosure, the location of the TRP and the synchronization information between TRPs may be the location of the TRP and the synchronization information between TRPs in the above-mentioned embodiments, respectively.

In an embodiment, the antenna location of the TRP may be: a location of an antenna where the TRP is located. For example, the antenna location of the TRP may also be the location of the TRP.

In some embodiments, the DNU indication indicating that the first information is used for the UE positioning includes: the DNU indication indicating that the measurement result is used to determine the location of the UE, and/or the DNU indication indicating that the information related to the base station is used to determine the location of the UE;
or
the DNU indication indicating that the first information is not used for the UE positioning includes: the DNU indication indicating that the measurement result is not used to determine the location of the UE, and/or the DNU indication indicating that the information related to the base station is not used to determine the location of the UE.

In an embodiment, the DNU indication indicating that the first information is used for the UE positioning may be: the DNU indication indicating that the measurement result is used for the UE positioning, and/or the DNU indication indicating that the information related to the base station is used for the UE positioning; and/or the DNU indication indicating that the first information is not used for the UE positioning may be: the DNU indication indicating that the measurement result is not used for the UE positioning, and/or the DNU indication indicating that the information related to the base station is not used for the UE positioning.

In some embodiments, the DNU indication indicating that the first information is used for the positioning integrity of the UE includes: the DNU indication indicating that the measurement result is used by the LMF for the positioning integrity, and/or the DNU indication indicating that the information related to the base station is used by the LMF for the positioning integrity;
or
the DNU indication indicating that the first information is not used for the positioning integrity of the UE includes: the DNU indication indicating that the measurement result is not used by the LMF for the positioning integrity, and/or the DNU indication indicating that the information related to the base station is used by the LMF for the positioning integrity.

In an embodiment, the DNU indication indicating that the first information is used for the positioning integrity of the UE may be: the DNU indication indicating that the measurement result is used for the positioning integrity of the UE, and/or the DNU indication indicating that the information related to the base station is used for the positioning integrity of the UE; and/or the DNU indication indicating that the first information is not used for the positioning integrity of the UE may be: the DNU indication indicating that the measurement result is not used for the positioning integrity of the UE, and/or the DNU indication indicating that the information related to the base station is not used for the positioning integrity of the UE.

In an embodiment, the information related to the base station may be provided by the base station.

In an embodiment, the measurement result is associated with an SRS resource, or the measurement result is associated with a TRP, that is, the LMF uses or does not use the measurement result corresponding to a specific SRS resource or the measurement result corresponding to a specific TRP for the UE positioning or the positioning integrity of the UE.

In an embodiment, based on the DNU indication, the LMF uses or does not use the location of a specific TRP and/or the synchronization information between TRPs for the UE positioning or the positioning integrity of the UE.

In an embodiment, based on the DNU indication, the LMF uses or does not use a specific TRP for the UE positioning or the positioning integrity of the UE.

In an embodiment of the present disclosure, the DNU indication may be sent to the LMF via the base station to implement the function of the DNU indication. For example, the base station may indicate whether the LMF uses the measurement result and/or the information related to the base station to determine the location of the UE; for example, the base station may indicate whether the LMF uses the measurement result and/or the information related to the base station for the positioning integrity.

For example, the base station sends the DNU indication to the LMF via an NRPPa message.

An embodiment of the present disclosure provides an information processing method, which is performed by a base station, including: receiving a third request sent by the LMF, in which the second request is used for requesting the DNU indication.

In an embodiment, sending the DNU indication to the LMF in step S91 includes: sending the DNU indication to the LMF based on the third request.

An embodiment of the present disclosure provides an information processing method, which is performed by a base station, including: sending the DNU indication to the LMF based on the third request.

Thus, in this embodiment of the present disclosure, the base station sends the DNU indication to the LMF only after receiving the second request sent by the LMF. In this way, the DNU indication may be sent only when the LMF has a need, thereby reducing the signaling overhead.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

As shown in FIG. 14, an embodiment of the present disclosure provides an information processing method, which is performed by a base station, including the following step.

At step S101, third capability information is sent to an LMF, in which the third capability information indicates a capability of supporting a DNU indication for a measurement result, and/or the third capability information indicates a capability of supporting a DNU indication for information related to the base station.

In some embodiments of the present disclosure, the DNU indication, the measurement result and the information related to the base station may be the DNU indication, the measurement result and the information related to the base station in step S71.

For example, the DNU indication indicates at least one of: the measurement result being used for the UE positioning or not used for the UE positioning; the information related to the base station being used for the UE positioning or not used for the UE positioning; the measurement result being used for the positioning integrity of the UE or not used for the positioning integrity of the UE; or the information related to the base station being used for positioning integrity of the UE or not used for the positioning integrity of the UE.

For example, the measurement result includes at least one of: a relative time of arrival (RTOA), an angle of arrival (AoA), a zenith angle of arrival (ZoA), or a gNB Rx-Tx time difference.

For example, the information related to the base station includes at least one of: a location of a TRP, synchronization information between TRPs, or an antenna location of a TRP.

In an embodiment, the base station sends the third capability information to the LMF; if the LMF receives the third capability information and determines the capability of supporting the DNU indication for the measurement result and/or the information related to the base station, and if the LMF receives the DNU indication and determines, based on the DNU indication, whether to use the measurement result and/or the information related to the base station to determine the location of the UE, and/or determines, based on the DNU indication, whether to use the measurement result and/or the information related to the base station for the positioning integrity.

In this way, the UE may send the third capability information to the LMF to inform the LMF of the capability of supporting the DNU indication for the measurement result and/or the information related to the base station; and if the LMF receives the DNU indication, the LMF may implement the function of the DNU indication based on the capability of supporting the DNU indication for the measurement result and/or the information related to the base station.

In another embodiment, the third capability information indicates the capability of supporting the DNU indication for the measurement result and/or the information related to the base station, or the third capability information indicates the capability of not supporting the DNU indication for the measurement result and/or the information related to the base station.

For example, the third capability information may be at least one bit. If the third capability information has a first value, such as "00", it may be used to indicate the capability of supporting the DNU indication for the measurement result; or if the third capability information has a second value, such as "01", it may be used to indicate the capability of not supporting the DNU indication for the information related to the base station; or if the third capability information has a third value, such as "10", it may be used to indicate the capability of supporting the DNU indication for the measurement result; or if the third capability information has a fourth value, such as "11", it may be used to indicate the capability of not supporting the DNU indication for the information related to the base station.

For example, the base station sends the third capability information via an NRPPa message.

Thus, in the embodiments of the present disclosure, the capability of supporting or not supporting the DNU indication for the measurement result may be determined or the capability of supporting or not supporting the DNU indication for the information related to the base station may be determined, through different values of the third capability information.

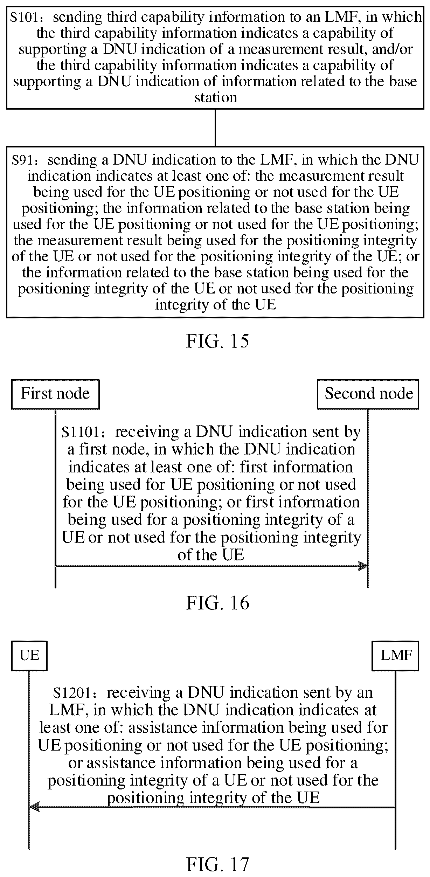

As shown in FIG. 15, an embodiment of the present disclosure provides an information processing method, which is performed by a base station, including the following step.

At step S101, third capability information is sent to an LMF, in which the third capability information indicates a capability of supporting a DNU indication for a measurement result, and/or the third capability information indicates a capability of supporting a DNU indication for information related to the base station.

At step S91, the DNU indication is sent to the LMF, in which the DNU indication indicates at least one of: the measurement result being used for the UE positioning or not used for the UE positioning; the information related to the base station being used for the UE positioning or not used for the UE positioning; the measurement result being used for the positioning integrity of the UE or not used for the positioning integrity of the UE; or the information related to the base station being used for the positioning integrity of the UE or not used for the positioning integrity of the UE.

In an optional embodiment, before step S91, the method further includes: receiving a second request sent by the LMF, in which the second request is used for requesting the DNU indication.

It should be noted that, for the description of the content repeated or corresponding to the aforementioned embodiments, such as the specific implementations of step S101 and step S91 in the embodiments of the present disclosure, reference may be made to the relevant parts of step S101 and step S91 in the aforementioned embodiments respectively, which will be not elaborated herein.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

An information processing method is described below, which is performed by the second node and is similar to the description of the information processing method performed by the first node described above; and for technical details not disclosed in embodiments of the information processing method performed by the second node, reference may be made to the description of the embodiments of the information processing method performed by the first node, which will be not described in details.

As shown in FIG. 16, an embodiment of the present disclosure provides an information processing method, which is performed by a second node, including the following step.

At step S1101, a DNU indication sent by a first node is received, in which the DNU indication indicates at least one of: first information being used for UE positioning or not used for the UE positioning; or first information being used for a positioning integrity of a UE or not used for the positioning integrity of the UE.

In some embodiments of the present disclosure, the first node and the second node may be the first node and the second node in the above embodiments, respectively. For example, the first node is an LMF, and the second node is a UE. For example, the first node is a UE or a base station, and the second node is an LMF.

In some embodiments of the present disclosure, the first information may be the first information in the above embodiments; the DNU indication may be the DNU indication in the above embodiments; the UE positioning and the positioning integrity of the UE may be the UE positioning and the positioning integrity of the UE in the above embodiments respectively.

In an embodiment, the DNU indication may be replaced by indication information. For example, the first node sends indication information to the second node, in which the indication information indicates at least one of the following: the first information being used for the UE positioning or not used for the UE positioning; and the first information being used for the positioning integrity of the UE or not used for the positioning integrity of the UE.

For the above implementations, reference may be made to the description on the first node side, which will not be described again here.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

In an embodiment, the first node is an LMF, the second node is a UE, and the first information includes: assistance information.

As shown in FIG. 17, an embodiment of the present disclosure provides an information processing method, which is performed by a UE, including the following step.

At step S1201, a DNU indication sent by an LMF is received, in which the DNU indication indicates at least one of: assistance information being used for UE positioning or not used for the UE positioning; or assistance information being used for a positioning integrity of the UE or not used for the positioning integrity of the UE.

In some embodiments of the present disclosure, the DNU indication may be the DNU indication in the above embodiments; and the assistance information may be the assistance information in the above embodiments.

In some embodiments of the present disclosure, the assistance information includes at least one of: a location of a TPR; synchronization information between TRPs; a PRS resource; a TRP identifier; or beam information of a PRS.

In some embodiments of the present disclosure, the location of the TPR, the synchronization information between TRPs, the PRS resource, the TRP identifier, and the beam information of the PRS may be the location of the TPR, the synchronization information between TRPs, the PRS resource, the TRP identifier, and the beam information of the PRS in the above embodiments respectively.

In some embodiments, the DNU indication indicating that the first information is used for the UE positioning includes: the DNU indication indicating that a PRS is measured using the assistance information, and/or the DNU indication indicating that a location of the UE is determined using a measurement result, in which the measurement result is obtained by measuring a PRS using the assistance information;
or
the DNU indication indicating that the first information is not used for the UE positioning includes: the DNU indication indicating that a PRS is not measured using the assistance information, and/or the DNU indication indicating that a location of the UE is not determined using a measurement result.

In some embodiments, the DNU indication indicating that the first information is used for the positioning integrity of the UE includes: the DNU indication indicating that a PRS is measured using the assistance information for the positioning integrity of the UE, and/or the DNU indication indicating that a measurement result obtained by measuring a PRS using the assistance information is used for the positioning integrity of the UE;
or
the DNU indication indicating that the first information is not used for the positioning integrity of the UE includes: the DNU indication indicating that a PRS is not measured using the assistance information for the positioning integrity of the UE, and/or the DNU indication indicating that a measurement result obtained by measuring a PRS using the assistance information is not used for the positioning integrity of the UE.

In an embodiment, the assistance information may be provided by the LMF.

An embodiment of the present disclosure provides an information processing method, which is performed by a UE, including: sending first capability information to the LMF, in which the first capability information indicating a capability of supporting a DNU indication for the assistance information.

In some embodiments of the present disclosure, the first capability information may be the first capability information in the above embodiments.

An embodiment of the present disclosure provides an information processing method, which is performed by a UE, including:
sending first capability information to the LMF, in which the first capability information indicating a capability of supporting a DNU indication for the assistance information; and
receiving the DNU indication sent by the LMF, in which the DNU indication indicates at least one of the following: the assistance information being used for the UE positioning or not used for the UE positioning; and the assistance information being used for the positioning integrity of the UE or not used for the positioning integrity of the UE.

For the above implementations, reference may be made to the description on the first node side (e.g., the LMF side), which will not be described again here.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

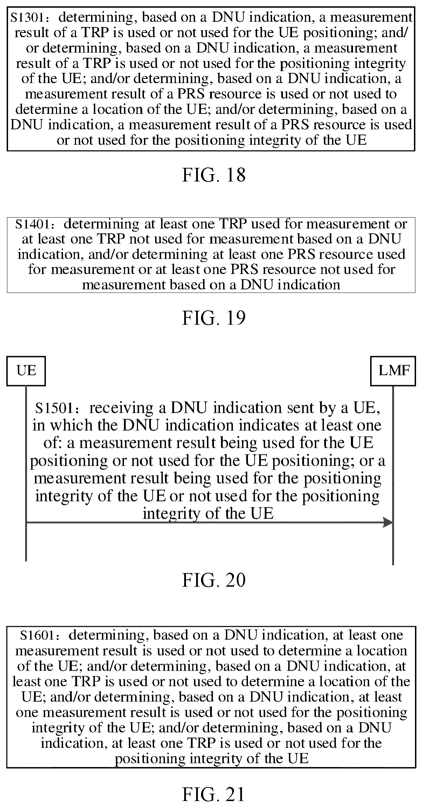

As shown in FIG. 18, an embodiment of the present disclosure provides an information processing method, which is performed by a UE, including the following step.

At step S1301, it is determined, based on a DNU indication, a measurement result of a TRP is used or not used for UE positioning; and/or it is determined, based on a DNU indication, a measurement result of a TRP is used or not used for a positioning integrity of the UE; and/or it is determined, based on a DNU indication, a measurement result of a PRS resource is used or not used to determine a location of the UE; and/or it is determined, based on a DNU indication, a measurement result of a PRS resource is used or not used for the positioning integrity of the UE.

In some embodiments of the present disclosure, the DNU indication may be the DNU indication in the above embodiments; and the measurement result may be the measurement result in the above embodiments.

In an embodiment, the measurement result of the TRP is a measurement result obtained by measuring a PRS using the TRP.

In an embodiment, the measurement result of the PRS resource is a measurement result obtained by measuring a PRS using the PRS resource.

In an embodiment, using the measurement result of the PRS resource may refer to using the measurement result of the PRS of the TRP, and/or not using the measurement result of the PRS resource may refer to not using the measurement result of the PRS resource of the TRP. For example, one TRP corresponds to one or more PRS resources.

In an embodiment, the measurement result is associated with the PRS resource, or the measurement result is associated with the TRP, that is, the LMF uses or does not use the measurement result corresponding to a specific PRS resource or the measurement result corresponding to a specific TRP for the UE positioning or the positioning integrity of the UE.

In some embodiments, the method includes the above-mentioned steps S1201 and S1301.

Thus, in this embodiment of the present disclosure, the UE may accurately determine, based on the DNU indication, whether to use the assistance information and/or the measurement result for the UE positioning and/or the positioning integrity of the UE, etc.

As shown in FIG. 19, an embodiment of the present disclosure provides an information processing method, which is performed by a UE, including the following step.

At step S1401, at least one TRP used for measurement or at least one TRP not used for measurement is determined based on a DNU indication, and/or at least one PRS resource used for measurement or at least one PRS resource not used for measurement is determined based on a DNU indication.

In some embodiments of the present disclosure, the DNU indication may be the DNU indication in the above embodiments.

In an embodiment, at least one measured PRS resource may be at least one measured PRS resource of at least one TRP. Here, one TRP corresponds to one or more PRS resources.

In an embodiment, the UE may determine, based on assistance information and the DNU indication, at least one TRP used for measurement or at least one TRP not used for measurement; and/or the UE may determine, based on assistance information and the DNU indication, a PRS resource used for measurement or at least one PRS resource not used for measurement.

For example, there are 10 TRPs. The UE may determine, based on the DNU indication and TRP identifiers of the 10 TRPs, that 8 TRPs of the 10 TRPs are used for the UE positioning and the other 3 TRPs of the 10 TRPs are not used for the UE positioning; and/or the LMF may determine, based on TRP identifiers of the 10 TRPs, that 6 TRPs of the 10 TRPs are used for the positioning integrity of the UE and the other 4 TRPs of the 10 TRPs are not used for the positioning integrity of the UE. In this way, the UE may indicate, through the DNU indication, that TRPs corresponding to 8 TRP identifiers are used for the UE positioning and/or the positioning integrity of the UE while TRPs corresponding to the other 2 TRP identifiers are not used for the UE positioning and/or the positioning integrity of the UE.

For example, the DNU indication may instruct the UE to use the PRS sent by a specific TRP or not to use the PRS sent by a specific TRP for the UE positioning and/or the positioning integrity of the UE.

In some embodiments, the method includes the above-mentioned steps S1201 and S1401.

In this way, in this embodiment of the present disclosure, the UE may accurately determine, based on the DNU indication, whether to use the TRP and/or the PRS resource for the UE positioning and/or the positioning integrity of the UE, etc.

It should be noted that, for the description of the content repeated or corresponding to the aforementioned embodiments, such as the specific implementations of step S1201 in the embodiments of the present disclosure, reference may be made to the relevant parts of step S1201 in the aforementioned embodiments respectively, which will be not elaborated herein.

For the above implementations, reference may be made to the description on the first node side (e.g., the LMF side), which will not be described again here.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

In some embodiments, the first node is a UE, the second node is an LMF, and the first information includes: a measurement result.

As shown in FIG. 20, an embodiment of the present disclosure provides an information processing method, which is performed by an LMF, including the following step.

At step S1501, a DNU indication sent by a UE is received, in which the DNU indication indicates at least one of: a measurement result being used for UE positioning or not used for the UE positioning; or a measurement result being used for a positioning integrity of the UE or not used for the positioning integrity of the UE.

In some embodiments of the present disclosure, the DNU indication may be the DNU indication in the above embodiments.

In some embodiments, the measurement result includes at least one of a RSTD, a RSRP, a RSRPP or a UE Rx-Tx time difference.

In some embodiments of the present disclosure, the RSTD, the RSRP, the RSRPP and the UE Rx-Tx time difference may be the RSTD, the RSRP, the RSRPP and the UE Rx-Tx time difference in the above embodiments, respectively.

In some embodiments, the DNU indication indicating that the first information is used for the UE positioning includes: the DNU indication indicating that the measurement result is used to determine a location of the UE;
or
the DNU indication indicating that the first information is not used for the UE positioning includes: the DNU indication indicating that the measurement result is not used to determine a location of the UE.

In some embodiments, the DNU indication indicating that the first information is used for the positioning integrity of the UE includes: the DNU indication indicating that the measurement result is used by the LMF for the positioning integrity;
or
the DNU indication indicating that the first information is not used for the positioning integrity of the UE includes: the DNU indication indicating that the measurement result is not used by the LMF for the positioning integrity.

In an embodiment, the measurement result may be provided by the UE.

An embodiment of the present disclosure provides an information processing method, which is performed by an LMF, including: sending a second request to the UE, in which the second request is used for requesting the DNU indication.

An embodiment of the present disclosure provides an information processing method, which is performed by an LMF, including: sending a second request to the UE, in which the second request is used for requesting the DNU indication; and receiving the DNU indication sent by the UE.

An embodiment of the present disclosure provides an information processing method, which is performed by an LMF, including: receiving second capability information sent by the UE, in which the second capability information indicates a capability of supporting a DNU indication for a measurement result.

In some embodiments of the present disclosure, the third information and the second request may be the third information and the second request in the above embodiments, respectively; the second capability information may be the second capability information in the above embodiments.

As shown in FIG. 21, an embodiment of the present disclosure provides an information processing method, which is performed by an LMF, including the following step.

At step S1601, it is determined, based on a DNU indication, at least one measurement result is used or not used to determine a location of the UE; and/or it is determined, based on a DNU indication, at least one TRP is used or not used to determine a location of the UE; and/or it is determined, based on a DNU indication, at least one measurement result is used or not used for positioning integrity of the UE; and/or it is determined, based on a DNU indication, at least one TRP is used or not used for positioning integrity of the UE.

In an embodiment, the method includes step S1501 and step S1601.

In this way, in this embodiment of the present disclosure, the LMF may accurately determine, based on the DNU indication, whether to use the measurement result and/or the TRP for the UE positioning and/or the positioning integrity of the UE, etc..

For the above implementations, reference may be made to the description on the first node side (e.g., the LMF side), which will not be described again here.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

In some embodiments, the first node is a base station, the second node is an LMF, and the first information includes: a measurement result.

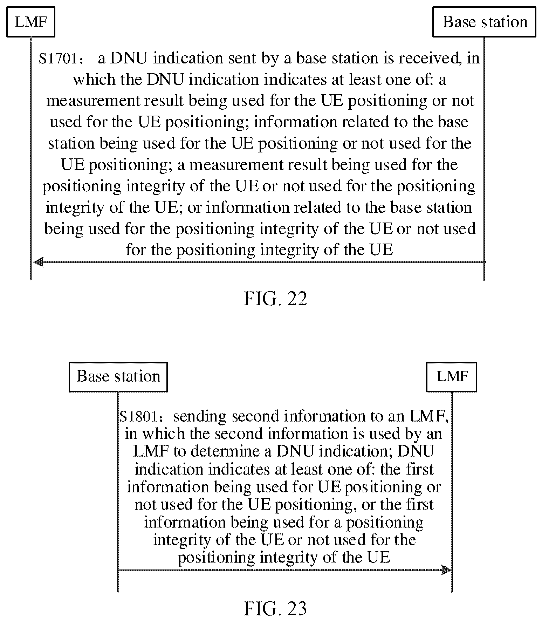

As shown in FIG. 22, an embodiment of the present disclosure provides an information processing method, which is performed by an LMF, including the following step.

At step S1701, a DNU indication sent by a base station is received, in which the DNU indication indicates at least one of: a measurement result being used for the UE positioning or not used for the UE positioning; information related to the base station being used for the UE positioning or not used for the UE positioning; a measurement result being used for a positioning integrity of the UE or not used for the positioning integrity of the UE; or information related to the base station being used for a positioning integrity of the UE or not used for the positioning integrity of the UE.

In some embodiments of the present disclosure, the DNU indication may be the DNU indication in the above embodiments; the measurement result and the information related to the base station may be the measurement result and the information related to the base station in the above embodiments, respectively.

In some embodiments, the measurement result includes at least one of: a relative time of arrival (RTOA), an angle of arrival (AoA), a zenith angle of arrival (ZoA), or a gNB Rx-Tx time difference;
and/or the information related to the base station includes at least one of: a location of a TRP, synchronization information between TRPs, or an antenna location of a TRP.

In some embodiments of the present disclosure, the RTOA, the AoA, the ZoA and the gNB Rx-Tx time difference may be the RTOA, the AoA, the ZoA and the gNB Rx-Tx time difference in the above-mentioned embodiments respectively; the location of the TRP, the synchronization information between TRPs and the antenna location of the TRP may be the location of the TRP, the synchronization information between TRPs and the antenna location of the TRP in the above-mentioned embodiments respectively.

In some embodiments, the DNU indication indicating that the first information is used for the UE positioning includes: the DNU indication indicating that the measurement result is used to determine the location of the UE, and/or the DNU indication indicating that the information related to the base station is used to determine the location of the UE;
or
the DNU indication indicating that the first information is not used for the UE positioning includes: the DNU indication indicating that the measurement result is not used to determine the location of the UE, and/or the DNU indication indicating that the information related to the base station is not used to determine the location of the UE.

In some embodiments, the DNU indication indicating that the first information is used for the positioning integrity of the UE includes: the DNU indication indicating that the measurement result is used by the LMF for the positioning integrity, and/or the DNU indication indicating that the information related to the base station is used by the LMF for the positioning integrity;
or
the DNU indication indicating that the first information is not used for the positioning integrity of the UE includes: the DNU indication indicating that the measurement result is not used by the LMF for the positioning integrity, and/or the DNU indication indicating that the information related to the base station is used by the LMF for the positioning integrity.

An embodiment of the present disclosure provides an information processing method, which is performed by an LMF, including: sending a second request to a base station, in which the second request is used for requesting the DNU indication.

An embodiment of the present disclosure provides an information processing method, which is performed by an LMF, including: sending a second request to a base station, in which the second request is used for requesting the DNU indication; and receiving the DNU indication sent by the base station.

An embodiment of the present disclosure provides an information processing method, which is performed by an LMF, including: receiving third capability information sent by the base station, in which the third capability information indicates a capability of supporting a DNU indication for the measurement result, and/or the third capability information indicates a capability of supporting a DNU indication for the information related to the base station.

In some embodiments of the present disclosure, the fourth information and the third request may be the fourth information and the third request in the above embodiments, respectively; the third capability information may be the third capability information in the above embodiments.

In some embodiments, after step S1701, the method further includes step S1601. Thus, in this embodiment of the present disclosure, the LMF may accurately determine, based on the DNU indication, whether to use the measurement result and/or the TRP for the UE positioning and/or the positioning integrity of the UE, etc.

For the above implementations, reference may be made to the description on the first node side (e.g., the base station side), which will not be described again here.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

An information processing method is described below, which is performed by the base station and is similar to the description of the information processing method performed by the LMF and/or the UE described above; and for technical details not disclosed in embodiments of the information processing method performed by the base station, reference may be made to the description of the embodiments of the information processing method performed by the LMF and/or the base station, which will be not described in details.

As shown in FIG. 23, an embodiment of the present disclosure provides an information processing method, which is performed by a base station, including the following step.

At step S1801, second information is sent to an LMF, in which the second information is used by an LMF to determine a DNU indication; DNU indication indicates at least one of: the first information being used for UE positioning or not used for the UE positioning, or the first information being used for a positioning integrity of a UE or not used for the positioning integrity of the UE.

In some embodiments of the present disclosure, the first information and the second information may be the first information and the second information in the above-mentioned embodiments respectively; the DNU indication may be the DNU indication in the above-mentioned embodiments; the UE positioning and the positioning integrity of the UE may be the UE positioning and the positioning integrity of the UE in the above-mentioned embodiments respectively; the first request is the first request in the above-mentioned embodiments.

For example, the second information may include the DNU indication, or the second information may be used to determine the DNU indication.

For example, the second information may include assistance information.

For example, the second information indicates that a location of a TRP has changed, or a location of a TRP is unavailable, or a location of a TRP exceeds an error range, or TRPs are no longer time synchronized, or synchronization information between the TRPs is no longer available, or the TRP or the PRS sent by the TRP is not suitable for the UE positioning or the positioning integrity of the UE; here, the DNU indication determined by the second information indicates that the assistance information is not used for the UE positioning and/or the positioning integrity of the UE.

In an embodiment, the second information is sent via an NRPPa message. For example, the base station sends an NRPPa message to the LMF, and the NRPPa message carries the second information.

In some embodiments, before sending the second information to the LMF in step S1801, the method includes: receiving a first request sent by the LMF, in which the first request is used to request the second information.

An embodiment of the present disclosure provides an information processing method, which is performed by a base station, including: receiving a first request sent by the LMF, in which the first request is used to request the second information.

For the above implementations, reference may be made to the description on the first node side (e.g., the LMF side), which will not be described again here.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

In order to further explain any embodiment of the present disclosure, several specific embodiments are provided below.

### Example 1

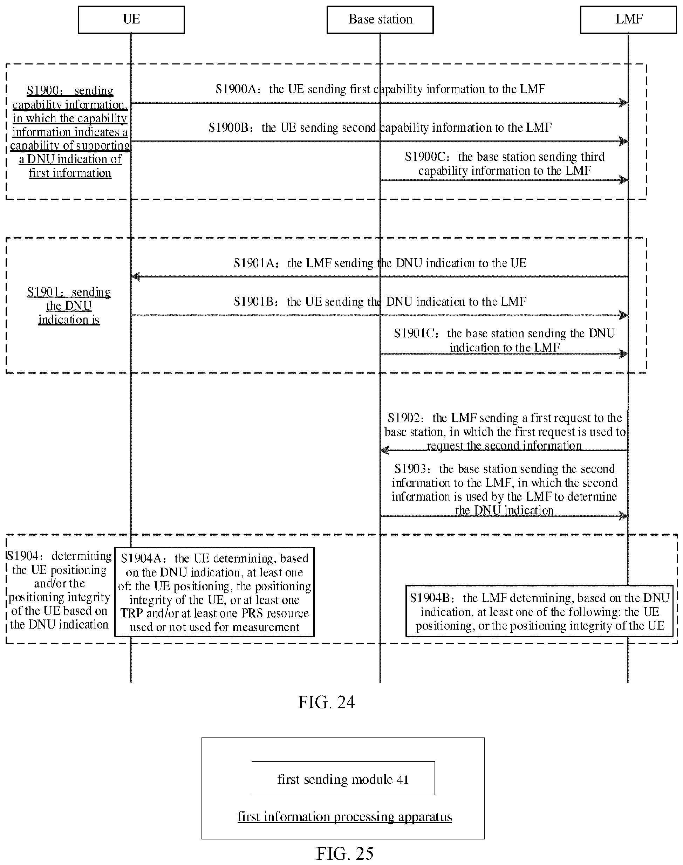

As shown in FIG. 24, an embodiment of the present disclosure provides an information processing method, which is performed by a communication device. The communication device includes: a UE, a base station, and an LMF; the information processing method includes the following steps.

At step S1900, capability information is sent, in which the capability information is used to indicate a capability of supporting a DNU indication for first information.

Optionally, in step S1900A, the UE sends first capability information to the LMF. For example, the first capability information is used to indicate a capability of supporting a DNU indication for assistance information. For step S1900A, reference may be made to the description of the above step S61.

Optionally, in step S1900B, the UE sends second capability information to the LMF. For example, the second capability information is used to indicate a capability of supporting a DNU indication for a measurement result. For step S1900B, reference may be made to the description of the above step S81.

Optionally, in step S1900C, the UE sends third capability information to the LMF. For example, the third capability information is used to indicate a capability of supporting a DNU indication for a measurement result, and/or the third capability information is used to indicate a capability of supporting a DNU indication for information related to the base station. For step S1900C, reference may be made to the description of the above step S101.

At step S1901, the DNU indication is sent.

Optionally, in step S1901A, the LMF sends the DNU indication to the UE. For the DNU indication in step S1901A, reference may be made to the description of the DNU indication in step S31. For example, the DNU indication is used to indicate whether to use the assistance information to measure a PRS, and/or the DNU indication is used to indicate whether to use the measurement result to determine a location of the UE. For another example, the DNU indication is used to indicate whether the UE uses the assistance information to measure the PRS for the positioning integrity, and/or the DNU indication is used to indicate whether the UE uses the measurement result obtained by measuring the PRS using the assistance information for the positioning integrity. For example, the assistance information includes at least one of the following: a location of the TRP, synchronization information between TRPs, a TRP identifier, a PRS resource, and beam information of a PRS.

Optionally, in step S1901B, the UE sends the DNU indication to the LMF. For the DNU indication in step S1901B, reference may be made to the description of the DNU indication in step S71. For example, the DNU indication is used to indicate whether to use the measurement result to determine a location of the UE. For another example, the DNU indication is used to indicate whether the LMF uses the measurement result for the positioning integrity. For example, the measurement result includes at least one of the following: a RSTD, a RSRP, a RSRPP, and a UE Rx-Tx time difference.

Optionally, in step S1901C, the bases station sends the DNU indication to the LMF. For the DNU indication in step S1901C, reference may be made to the description of the DNU indication in step S91. For example, the DNU indication is used to indicate whether the measurement result is used for the UE positioning, and/or the DNU indication is used to indicate whether the information related to the base station is used for the UE positioning. For another example, the DNU indication is used to indicate whether the LMF uses the measurement result for the positioning integrity, and/or the DNU indication is used to indicate whether the LMF uses the information related to the base station for the positioning integrity. For example, the measurement result includes at least one of the following: a RTOA, an AoA, a ZoA or a gNB Rx-Tx time difference; and/or the information related to the base station includes at least one of the following: a location of the TRP, synchronization information between the TRPs and an antenna location of the TRP.

At step S1902, the LMF sends a first request to the base station, in which the first request is used to request the second information.

Optionally, for step S1902A, reference may be made to the description of step S51.

At step S1903, the base station sends the second information to the LMF, in which the second information is used by the LMF to determine the DNU indication.

At step S1904, the UE positioning and/or the positioning integrity of the UE is determined based on the DNU indication.

Optionally, in step S1904A, the UE determines, based on the DNU indication, at least one of: the UE positioning, the positioning integrity of the UE, or at least one TRP and/or at least one PRS resource used or not used for measurement. For step S1904A, reference may be made to the description of the above steps S1301 and S1401.

Optionally, in step S1904B, the LMF determines, based on the DNU indication, at least one of the following: the UE positioning, or the positioning integrity of the UE. For step S1904B, reference may be made to the description of the above step S1601.

The above steps S1900, S1902, S1903 and/or S1904 are optional. Alternatively, the above steps S1900 and/or S1904 are optional. Step S1901 is an important step.

For example, step S1901 may be used as an independent embodiment.

Step S1901 + step S1900 may be used as an independent embodiment.

Step S1901 + step S1904 may be used as an independent embodiment.

Step S1900 + step S1901 + step S1904 may be used as an independent embodiment.

Step S1901 + step S1903 may be used as an independent embodiment.

Step S1900+step S1901+step S1903 may be used as an independent embodiment.

Step S1901+step S1902+step S1903 may be used as an independent embodiment.

Step S1900 + step S1901 + step S1902 + step S1903 may be used as an independent embodiment.

Step S1901 + step S1904 may be used as an independent embodiment.

Step S1900 + step S1901 + step S1904 may be used as an independent embodiment.

Step S1900 + step S1901 + step S1903 + step S1904 may be used as an independent embodiment.

Step S1900 + step S1901 + step S1902 + step S1903 + step S1904 may be used as an independent embodiment.

Step S1901+step S1903+step S1904 may be used as an independent embodiment.

And step S1901+step S1902+step S1903+step S1904 may be used as independent embodiments, etc.

In the above steps, the order of S1900B and S1901B may be interchanged, the order of S1900C and S1901C may be interchanged, and the order of S1900A and S1901A cannot be interchanged. For example, the above step S1900A is before step S1901A, and/or step S1900B may be before or after step S1901B, and/or step S1900C may be before or after step S1901C.

For the above implementations, specific details may be referred to the description on the UE side and/or the LMF side and/or the base station side, which will not be repeated here.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

### Example 2

An embodiment of the present disclosure provides an information processing method, which is performed by a communication device. The communication device includes: a UE, a base station, and an LMF; the information processing method includes the following steps.

At step S2001A, the LMF provides a DNU indication to the UE, in which the DNU indication is used to indicate to the UE whether assistance information provided by the LMF can be used for the UE positioning and/or positioning integrity of the UE.

At step S2001B, the UE provides the DNU indication to the LMF, in which the DNU indication is used to indicate to the UE whether a measurement result reported by the UE can be used by the LMF for the UE positioning and/or positioning integrity of the UE.

At step S2001C, the gNB provides the DNU indication to the LMF, in which the DNU indication is used to indicate to the UE whether a measurement result reported by the gNB can be used for the UE positioning and/or positioning integrity of the UE.

Optionally, based on step S2001A, determining whether to be used for the UE positioning includes whether the UE uses the assistance information to measure a PRS, and/or whether the UE uses the measurement result of the PRS corresponding to the assistance information to calculate the UE position.

Optionally, based on step S2001A, the assistance information includes but is not limited to at least one of the following: a location of a TRP, synchronization information between TRPs, and beam information of a PRS (e.g., a beam direction).

At step S2002A, based on step S2001A, the gNB provides the LMF with DNU information of the assistance information, that is, the gNB provides the LMF with DNU information including the location of the TRP, the synchronization information between TRPs, and the beam information of the PRS.

Optionally, based on step S2002A, the LMF requests the gNB to provide the DNU information of the assistance information to the LMF.

At step S2002B, based on step S2001B, the UE provides the LMF with the following DNU information of the positioning measurement result, including: a RSTD, a RSRP and/or a RSRPP of a PRS, and a UE Rx-Tx time difference.

Optionally, based on step S2002B, the LMF requests the UE to provide the DNU information of the measurement result.

At step S2002C, based on step S2001C, the gNB provides the LMF with the following DNU information of the positioning measurement result, including: a RTOA and/or an uplink angle of arrival (AoA and/or ZoA).

Optionally, based on step S2001C, the LMF requests the gNB to provide the DNU information of the positioning measurement result.

At step S2003A, based on step S2001A, the UE sends a capability of supporting the DNU for positioning assistance information to the LMF.

At step S2003B, based on step S2001B, the UE sends the capability of supporting the DNU for the positioning measurement result to the LMF.

At step S2004A, based on step S2001A, the UE determines, according to the DNU indication sent by the LMF, whether to use the positioning measurement result of the TRP or the positioning measurement result of the PRS resource of the TRP to calculate the location of the UE or implement the positioning integrity; and/or the UE determines, according to the DNU indication sent by the LMF, whether to measure a certain TRP or whether to measure a certain PRS resource of a certain TRP.

At step S2004B, based on step S2001B, the LMF determines, according to the DNU indication sent by the UE, whether to use a certain positioning measurement result to calculate the location of the UE or implement the positioning integrity of the UE.

At step S2004C, based on step S2001C, the LMF determines, according to the DNU indication sent by the gNB, whether to use a certain positioning measurement result to calculate the location of the UE or implement the positioning integrity of the UE.

For the above implementations, specific details may be referred to the description on the UE side and/or the LMF side and/or the base station side, which will not be repeated here.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

### Example 3

An embodiment of the present disclosure provides an information processing system. The information processing system includes: a UE, a base station, and an LMF.

The LMF is configured to: send a first request to the base station, in which the first request is used to request second information.

The base station is configured to: send the second information to the LMF, in which the second information is used by the LMF to determine a DNU indication.

The LMF is further configured to: send the DNU indication to the UE, in which the DNU indication is used to indicate at least one of the following: assistance information being used for the UE positioning or not used for the UE positioning or assistance information being used for positioning integrity of the UE or not used for positioning integrity of the UE.

The UE is configured to: determine, according to the DNU indication, that the measurement result of the TRP is used or not used to determine the UE positioning; and/or determine, according to the DNU indication, that the measurement result of the TRP is used or not used to determine the positioning integrity of the UE; and/or determine, according to the DNU indication, the measurement result of the PRS resource is used or not used to determine the location of the UE; and/or determine, according to the DNU indication, the measurement result of the PRS resource is used or not used to determine the positioning integrity of the UE.

The UE is configured to: determine, based on the DNU indication, at least one TRP used for measurement or at least one TRP not used for measurement; and/or determine, based on the DNU indication, at least one PRS resource used for measurement or at least one PRS resource not used for measurement.

For the above implementations, specific details may be referred to the description on the UE side and/or the LMF side and/or the base station side, which will not be repeated here.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

### Example 4

An embodiment of the present disclosure provides an information processing system. The information processing system includes: a UE and an LMF.

The UE is configured to: send a DNU indication to the LMF, in which the DNU indication is used to indicate at least one of the following: a measurement result being used for the UE positioning or not used for the UE positioning or a measurement result being used for a positioning integrity of the UE or not used for the positioning integrity of the UE.

The LMF is configured to: determine, based on the DNU indication, at least one measurement result is used or not used to determine the location of the UE, and/or determine, based on the DNU indication, at least one TRP is used or not used to determine the location of the UE; and/or determine, based on the DNU indication, at least one measurement result is used or not used to determine the positioning integrity of the UE; and/or determine, based on the DNU indication, at least one TRP is used or not used to determine the positioning integrity of the UE.

For the above implementations, specific details may be referred to the description on the UE side and/or the LMF side, which will not be repeated here.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

### Example 5

An embodiment of the present disclosure provides an information processing system. The information processing system includes: a UE and an LMF.

The UE is configured to: send a DNU indication to the LMF, in which the DNU indication is used to indicate at least one of the following: a measurement result being used for the UE positioning or not used for the UE positioning, information related to a base station being used for the UE positioning or not used for the UE positioning, a measurement result being used for a positioning integrity of the UE or not used for the positioning integrity of the UE, or information related to a base station being used for the UE positioning or not used for the positioning integrity of the UE.

The LMF is configured to: determine, based on the DNU indication, at least one measurement result is used or not used to determine the location of the UE, and/or determine, based on the DNU indication, at least one TRP is used or not used to determine the location of the UE; and/or determine, based on the DNU indication, at least one measurement result is used or not used to determine the positioning integrity of the UE; and/or determine, based on the DNU indication, at least one TRP is used or not used to determine the positioning integrity of the UE.

For the above implementations, specific details may be referred to the description on the LMF side and/or the base station side, which will not be repeated here.

This embodiment may be combined with any other embodiments without contradiction; any solution (or optional solution) in this embodiment may be combined with each other without contradiction; any solution in this embodiment may be combined with any solution in other embodiments without contradiction; the order of steps in this embodiment may be exchanged without contradiction.

It should be noted that those skilled in the art may understand that the method provided in this embodiment of the present disclosure may be executed alone or together with some methods in the embodiments of the present disclosure or some methods in related technologies.

As shown in FIG. 25, an embodiment of the present disclosure provides a first information processing apparatus, which may be a first node, including a first sending module 41.

The first sending module 41 is configured to send a do-not-use (DNU) indication to a second node, in which the DNU indication indicates at least one of:

first information being used for UE positioning or not used for the UE positioning; or

first information being used for a positioning integrity of a UE or not used for the positioning integrity of the UE.

In some embodiments, the first node is a location management function (LMF), the second node is the UE, and the first information includes: assistance information.

In some embodiments, the assistance information comprises at least one of:
a location of a transmission reception point (TPR);
synchronization information between TRPs;
a position reference signal (PRS) resource; or
a TRP identifier.

In some embodiments, the DNU indication indicating that the first information is used for the UE positioning comprises: the DNU indication indicating that a PRS is measured using the assistance information, and/or the DNU indication indicating that a location of the UE is determined using a measurement result, wherein the measurement result is obtained by measuring a PRS using the assistance information;
or
the DNU indication indicating that the first information is not used for the UE positioning comprises: the DNU indication indicating that a PRS is not measured using the assistance information, and/or the DNU indication indicating that a location of the UE is not determined using a measurement result.

In some embodiments, the DNU indication indicating that the first information is used for the positioning integrity of the UE comprises: the DNU indication indicating that the UE uses the assistance information to measure a PRS for the positioning integrity, and/or the DNU indication indicating that the UE uses a measurement result obtained by measuring a PRS using the assistance information for the positioning integrity;
or
the DNU indication indicating that the first information is not used for the positioning integrity of the UE comprises: the DNU indication indicating that the UE does not use the assistance information to measure a PRS for the positioning integrity, and/or the DNU indication indicating that the UE does not use a measurement result obtained by measuring a PRS using the assistance information for the positioning integrity.

An embodiment of the present disclosure provides a first information processing apparatus, which may be an LMF, including a first receiving module configured to receive second information sent by a base station (gNB), wherein the second information is used by the LMF to determine the DNU indication.

An embodiment of the present disclosure provides a first information processing apparatus, which may be an LMF, including a first sending module 41 configured to: send a first request to the base station, wherein the first request is used to request the second information.

An embodiment of the present disclosure provides a first information processing apparatus, which may be an LMF, including a first receiving module configured to: receive first capability information sent by the UE, wherein the first capability information indicates a capability of supporting the DNU indication for the assistance information.

In some embodiments, the first node is the UE or a base station, the second node is an LMF, and the first information comprises: a measurement result and/or information related to the base station.

In some embodiments, the first node is the UE, and the measurement result comprises at least one of:
a reference signal time difference (RSTD);
a reference signal receiving power (RSRP);
a reference signal receiving power path (RSRPP); or
a UE transmit-receive (Rx-Tx) time difference.

In some embodiments, the DNU indication indicating that the first information is used for the UE positioning comprises: the DNU indication indicating that a location of the UE is determined using the measurement result;
or
the DNU indication indicating that the first information is not used for the UE positioning comprises: the DNU indication indicating that a location of the UE is not determined using the measurement result.

In some embodiments, the DNU indication indicating that the first information is used for the positioning integrity of the UE comprises: the DNU indication indicating that the LMF uses the measurement result for the positioning integrity;
or
the DNU indication indicating that the first information is not used for the positioning integrity of the UE comprises: the DNU indication indicating that the LMF does not use the measurement result for the positioning integrity.

An embodiment of the present disclosure provides a first information processing apparatus, which may be a UE, including a first sending module 41 configured to: send second capability information to the LMF, wherein the second capability information indicates a capability of supporting the DNU indication for the measurement result.

In some embodiments, the first node is a base station;
the measurement result comprises at least one of: a relative time of arrival (RTOA), an angle of arrival (AoA), a zenith angle of arrival (ZoA), or a gNB Rx-Tx time difference;
   and/or
the information related to the base station comprises at least one of: a location of a TRP, synchronization information between TRPs, or an antenna location of a TRP.

In some embodiments, the DNU indication indicating that the first information is used for the UE positioning comprises: the DNU indication indicating that a location of the UE is determined using the measurement result, and/or the DNU indication indicating that a location of the UE is determined using the information related to the base station;
or
the DNU indication indicating that the first information is not used for the UE positioning comprises: the DNU indication indicating that a location of the UE is not determined using the measurement result, and/or the DNU indication indicating that a location of the UE is not determined using the information related to the base station.

In some embodiments, the DNU indication indicating that the first information is used for the positioning integrity of the UE comprises: the DNU indication indicating that the LMF uses the measurement result for the positioning integrity, and/or the DNU indication indicating that the LMF uses the information related to the base station for the positioning integrity;
or
the DNU indication indicating that the first information is not used for the positioning integrity of the UE comprises: the DNU indication indicating that the LMF does not use the measurement result for the positioning integrity, and/or the DNU indication indicating that the LMF does not use the information related to the base station for the positioning integrity.

An embodiment of the present disclosure provides a first information processing apparatus, which may be a base station, including a first sending module 41 configured to: send third capability information to the LMF, wherein the third capability information indicates a capability of supporting the DNU indication for the measurement result, and/or the third capability information indicates a capability of supporting the DNU indication for the information related to the base station.

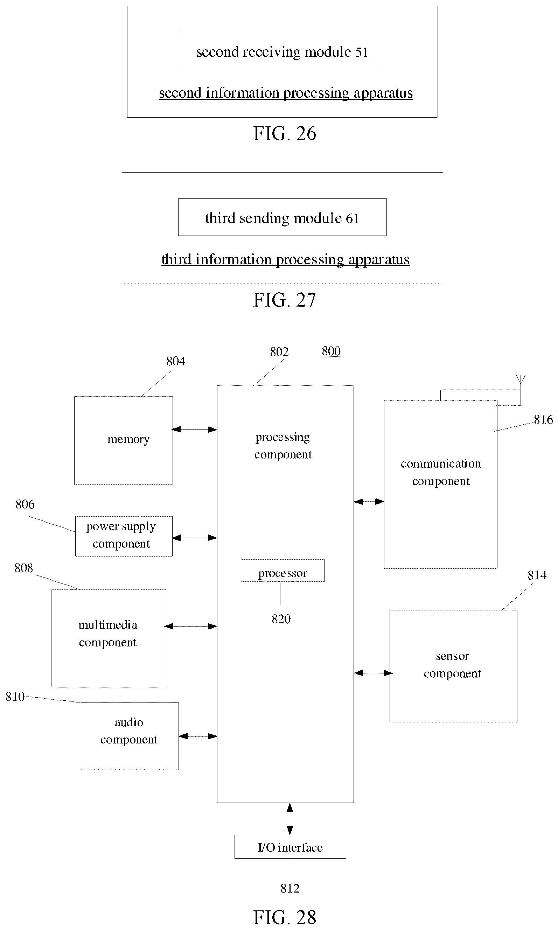

As shown in FIG. 26, an embodiment of the present disclosure provides a second information processing apparatus, which may be a second node, including: a second receiving module 51.

The second receiving module 51 is configured to: receive a do-not-use (DNU) indication sent by a first node, in which the DNU indication indicates at least one of:
first information being used for user equipment (UE) positioning or not used for the UE positioning; or
first information being used for a positioning integrity of a UE or not used for the positioning integrity of the UE.

In some embodiments, the first node is a location management function (LMF), the second node is the UE, and the first information includes: assistance information.

In some embodiments, the assistance information comprises at least one of:
a location of a transmission reception point (TPR);
synchronization information between TRPs;
a position reference signal (PRS) resource; or
a TRP identifier.

In some embodiments, the DNU indication indicating that the first information is used for the UE positioning comprises: the DNU indication indicating that a PRS is measured using the assistance information, and/or the DNU indication indicating that a location of the UE is determined using a measurement result, wherein the measurement result is obtained by measuring a PRS using the assistance information;
or
the DNU indication indicating that the first information is not used for the UE positioning comprises: the DNU indication indicating that a PRS is not measured using the assistance information, and/or the DNU indication indicating that a location of the UE is not determined using a measurement result.

In some embodiments, the DNU indication indicating that the first information is used for the positioning integrity of the UE comprises: the DNU indication indicating that the UE uses the assistance information to measure a PRS for the positioning integrity, and/or the DNU indication indicating that the UE uses a measurement result obtained by measuring a PRS using the assistance information for the positioning integrity;
or
the DNU indication indicating that the first information is not used for the positioning integrity of the UE comprises: the DNU indication indicating that the UE does not use the assistance information to measure a PRS for the positioning integrity, and/or the DNU indication indicating that the UE does not use a measurement result obtained by measuring a PRS using the assistance information for the positioning integrity.

An embodiment of the present disclosure provides a second information processing apparatus, which may be a UE, including a second sending module configured to: send first capability information to an LMF, wherein the first capability information indicates a capability of supporting the DNU indication for the assistance information.

An embodiment of the present disclosure provides a second information processing apparatus, which may be a UE, including a processing module, configured to perform at least one of:
determining, according to the DNU indication, to use a measurement result of a TRP to determine the UE positioning or not to use a measurement result of a TRP to determine the UE positioning;
determining, according to the DNU indication, to use a measurement result of a TRP to determine the positioning integrity of the UE or not to use a measurement result of a TRP to determine the positioning integrity of the UE;
determining, according to the DNU indication, to use a measurement result of a PRS resource to determine a location of the UE or not to use a measurement result of a PRS resource to determine a location of the UE; or
determining, according to the DNU indication, to use a measurement result of a PRS resource to determine the positioning integrity of the UE or not to use a measurement result of a PRS resource to determine the positioning integrity of the UE.

An embodiment of the present disclosure provides a second information processing apparatus, which may be a UE, including a processing module configured to perform at least one of:
determining, according to the DNU indication, at least one TRP used for measurement or at least one TRP not used for measurement; or
determining, according to the DNU indication, at least one PRS resource used for measurement or at least one PRS resource not used for measurement.

In some embodiments, the first node is the UE or a base station, the second node is an LMF, and the first information includes: a measurement result and/or information related to the base station.

In some embodiments, the first node is the UE, and the measurement result comprises at least one of:
a reference signal time difference (RSTD);
a reference signal receiving power (RSRP);
a reference signal receiving power path (RSRPP); or
a UE transmit-receive (Rx-Tx) time difference.

In some embodiments, the DNU indication indicating that the first information is used for the UE positioning comprises: the DNU indication indicating that a location of the UE is determined using the measurement result;
or
the DNU indication indicating that the first information is not used for the UE positioning comprises: the DNU indication indicating that a location of the UE is not determined using the measurement result.

In some embodiments, the DNU indication indicating that the first information is used for the positioning integrity of the UE comprises: the DNU indication indicating that the LMF uses the measurement result for the positioning integrity;
or
the DNU indication indicating that the first information is not used for the positioning integrity of the UE comprises: the DNU indication indicating that the LMF does not use the measurement result for the positioning integrity.

An embodiment of the present disclosure provides a second information processing apparatus, which may be an LMF, including a second receiving module 51 configured to: receive second capability information sent by the UE, wherein the second capability information indicates a capability of supporting the DNU indication for the measurement result.

In some embodiments, the first node is a base station;
the measurement result comprises at least one of: a relative time of arrival (RTOA), an angle of arrival (AoA), a zenith angle of arrival (ZoA), or a gNB Rx-Tx time difference;
   and/or
the information related to the base station comprises at least one of: a location of a TRP, synchronization information between TRPs, or an antenna location of a TRP.

In some embodiments, the DNU indication indicating that the first information is used for the UE positioning comprises: the DNU indication indicating that a location of the UE is determined using the measurement result, and/or the DNU indication indicating that a location of the UE is determined using the information related to the base station;
or
the DNU indication indicating that the first information is not used for the UE positioning comprises: the DNU indication indicating that a location of the UE is not determined using the measurement result, and/or the DNU indication indicating that a location of the UE is not determined using the information related to the base station.

In some embodiments, the DNU indication indicating that the first information is used for the positioning integrity of the UE comprises: the DNU indication indicating that the LMF uses the measurement result for the positioning integrity, and/or the DNU indication indicating that the LMF uses the information related to the base station for the positioning integrity;
or
the DNU indication indicating that the first information is not used for the positioning integrity of the UE comprises: the DNU indication indicating that the LMF does not use the measurement result for the positioning integrity, and/or the DNU indication indicating that the LMF does not use the information related to the base station for the positioning integrity.

An embodiment of the present disclosure provides a second information processing apparatus, which may be an LMF, including a second receiving module 51 configured to: receive third capability information sent by the base station, wherein the third capability information indicates a capability of supporting the DNU indication for the measurement result, and/or the third capability information indicates a capability of supporting the DNU indication for the information related to the base station.

An embodiment of the present disclosure provides a second information processing apparatus, which may be an LMF, including a processing module configured to perform at least one of:
determining, according to the DNU indication, to use at least one measurement result to determine a location of the UE or not to use at least one measurement result to determine a location of the UE;
determining, according to the DNU indication, to use at least one TRP to determine a location of the UE or not to use at least one TRP to determine a location of the UE;
determining, according to the DNU indication, to use at least one measurement result to determine the positioning integrity of the UE or not to use at least one measurement result to determine the positioning integrity of the UE; or
determining, according to the DNU indication, to use at least one TRP to determine the positioning integrity of the UE or not to use at least one TRP to determine the positioning integrity of the UE.

As shown in FIG. 27, an embodiment of the present disclosure provides a third information processing apparatus, which may be an LMF, including a third sending module 61.

The third sending module 61 is configured to send second information to a location management function (LMF), in which the second information is used by the LMF to determine a do-not-use (DNU) indication, and the DNU indication indicates at least one of:
first information being used for user equipment (UE) positioning or not used for the UE positioning; or
first information being used for a positioning integrity of a UE or not used for the positioning integrity of the UE.

The third information processing apparatus provided by this embodiment of the present disclosure may be a base station.

An embodiment of the present disclosure provides a third information processing apparatus including a third receiving module, configured to receive a first request sent by the LMF, wherein the first request is used to request the second information.

It should be noted that those skilled in the art can understand that the apparatus provided in the embodiments of the present disclosure can be executed alone or together with some apparatuses in the embodiments of the present disclosure or some apparatuses in related technologies.

Regarding the apparatus in the above embodiments, the specific manner in which each module performs operations has been described in detail in the embodiments of the method, and will not be elaborated here.

An embodiment of the present disclosure provides a communication device, including:
a memory for storing processor-extubate instructions;
a processor, connected to the memory;
in which the processor is configured to perform the information processing method provided by any of the aforementioned technical solutions.

The processor may include various types of storage media, which may be non-temporary computer storage media that can continue to memorize information stored thereon after the communication device loses power.

Here, the communication device includes: a UE or a network element, in which the network element may be any of the aforementioned first network element to fourth network element.

The processor may be connected to the memory through a bus or the like, and may be used to read an executable program stored in the memory, for example, at least one of the methods shown in FIGS. 2 to 24.

The present disclosure also provides a computer storage medium storing a computer executable program. When the executable program is executed by a processor, the information transmission method of any embodiment of the present disclosure, for example, at least one of the methods shown in FIGS. 2 to 24 may be implemented.

FIG. 28 is a schematic block diagram of a UE 800 according to an embodiment of the present disclosure. For example, the UE 800 may be a mobile phone, a computer, a digital broadcasting terminal, a message transceiver device, a gaming console, a tablet device, a medical device, a fitness device, a personal digital assistant, etc.

Referring to FIG. 28, the UE 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operations of the UE 800, such as operations associated with displays, telephone calls, data communications, camera operations, and recording operations. The processing component 802 may include one or more processors 820 to execute instructions to accomplish all or some of the steps of the method described above. Alternatively, the processing component 802 may include one or more modules to facilitate interactions between the processing component 802 and other components. For example, the processing component 802 may include a multimedia module to facilitate interactions between the multimedia component 808 and the processing component 802.

The memory 804 is configured to store various types of data to support operation at the UE 800. Examples of such data include instructions for any application or method operated on the UE 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 806 provides power to the various components of the UE 800. The power supply component 806 may include a power management system, one or more power supplies, and other components associated with generating, managing, and distributing power for the UE 800.

The multimedia component 808 includes a screen providing an output interface between the UE 800 and a user. In some embodiments, the screen may include a liquid crystal display (LCD) and a touch panel (TP). In the case that the screen includes a touch panel, the screen may be implemented as a touch screen to receive input signals from the user. If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the UE 800 is in an operating mode, such as a shooting mode or a video mode, the front camera and/or the rear camera may receive external multimedia data. Each front camera and rear camera may be a fixed optical lens system or have a focal length and optical zoom capability.

The audio component 810 is configured to output and/or input audio signals. For example, the audio component 810 includes a microphone (MIC) that is configured to receive external audio signals when the UE 800 is in an operating mode, such as a call mode, a recording mode, and a voice recognition mode. The received audio signals may be further stored in the memory 804 or sent in the communication component 816. In some embodiments, the audio component 810 further includes a speaker for outputting audio signals.

The I/ O interface 812 provides an interface between the processing component 802 and a peripheral interface module, said peripheral interface module may be a keypad, a click wheel, buttons, etc. These buttons may include, but are not limited to: a home button, a volume button, a start button, and a lock button.

The sensor component 814 includes one or more sensors for providing various aspects of status assessment for the UE 800. For example, the sensor component 814 can detect the open/closed state of the UE 800, the relative positioning of components, such as the display and keypad of the UE 800, and the sensor component 814 can also detect the position change of the UE 800 or a component of the UE 800, the presence or absence of contact between the user and the UE 800, the orientation or acceleration/deceleration of the UE 800, and the temperature change of the UE 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate communication between the UE 800 and other devices by wired or wireless means. The UE 800 may access a wireless network based on a communication standard, such as Wi-Fi, 2G or 3G, or their combination. In an exemplary embodiment, the communication component 816 receives broadcast signals or broadcast-related information from an external broadcast management system in a broadcast channel. In an exemplary embodiment, the communication component 816 further includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In example embodiments, the UE 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In example embodiments, there is also provided a non-transitory computer-readable storage medium including instructions, such as a memory 804 including instructions, the instructions being executable by a processor 820 of the UE 800 for accomplishing the above-described method. For example, the non-transitory computer-readable storage medium may be a ROM, a random access memory (RAM), a CD-ROM, a magnetic tape, floppy disks, and optical data storage devices, etc.

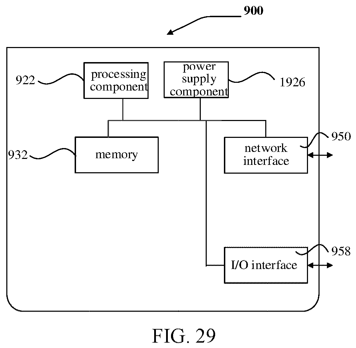

As shown in FIG. 29, an embodiment of the present disclosure shows a structure of a communication device. For example, the communication device 900 may be provided as a network-side device. The communication device may be various network elements, such as the aforementioned access network element and/or network function, etc.

Referring to FIG. 29, the communication device 900 includes a processing component 922, which further includes one or more processors, and a memory resource represented by a memory 932 for storing instructions executable by the processing component 922, such as an application. The application stored in the memory 932 may include one or more modules, each corresponding to a set of instructions. In addition, the processing component 922 is configured to execute instructions to execute any method of the aforementioned method applied to the access network device, such as any of the methods shown in FIG. 4 to FIG. 9.

The communication device 900 may also include a power supply component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server ^{™}, Mac OS X ^{™}, Unix ^{™}, Linux ^{™}, FreeBSD ^{™} or the like.

In the absence of contradiction, each step in a certain implementation or embodiment can be implemented as an independent embodiment, and the steps can be arbitrarily combined. For example, a solution after removing some steps in a certain implementation or embodiment can also be implemented as an independent embodiment, and the order of the steps in a certain implementation or embodiment can be arbitrarily exchanged. In addition, the optional methods or optional examples in a certain implementation or embodiment can be arbitrarily combined; in addition, the various implementations or embodiments can be arbitrarily combined. For example, some or all steps of different implementations or embodiments can be arbitrarily combined, and a certain implementation or embodiment can be arbitrarily combined with the optional methods or optional examples of other implementations or embodiments.

Those skilled in the art will readily appreciate other embodiments of the present disclosure after considering the specification and practicing the present disclosure. The present disclosure is intended to cover any variations, uses or adaptations of the present disclosure that follow the general principles of the present disclosure and include common knowledge or customary techniques in the art that are not disclosed in the present disclosure. The description and examples are to be considered exemplary only, and the true scope and spirit of the present disclosure are indicated by the following claims.

It should be understood that the present disclosure is not limited to the exact construction that has been described above and shown in the drawings and that various modifications and changes may be made without departing from the scope thereof. The scope of the present disclosure is limited only by the appended claims.

## Claims

1. An information processing method, performed by a first node, comprising:
sending a do-not-use (DNU) indication to a second node, wherein the DNU indication indicates at least one of:
first information being used for user equipment (UE) positioning or not used for the UE positioning; or
first information being used for a positioning integrity of a UE or not used for the positioning integrity of the UE.

2. The method of claim 1, wherein the first node is a location management function (LMF), the second node is the UE, and the first information comprises: assistance information.

3. The method of claim 2, wherein the assistance information comprises at least one of:
a location of a transmission reception point (TPR);
synchronization information between TRPs;
a position reference signal (PRS) resource; or
a TRP identifier.

4. The method of claim 2 or 3, wherein
the DNU indication indicating that the first information is used for the UE positioning comprises: the DNU indication indicating that the assistance information is used to measure a PRS, and/or the DNU indication indicating that a measurement result is used to determine a location of the UE, wherein the measurement result is obtained by measuring a PRS using the assistance information; or the DNU indication indicating that the first information is not used for the UE positioning comprises: the DNU indication indicating that the assistance information is not used to measure a PRS, and/or the DNU indication indicating that a measurement result is not used to determine a location of the UE; and/or
the DNU indication indicating that the first information is used for the positioning integrity of the UE comprises: the DNU indication indicating that the UE uses the assistance information to measure a PRS for the positioning integrity, and/or the DNU indication indicating that the UE uses a measurement result obtained by measuring a PRS using the assistance information for the positioning integrity; or the DNU indication indicating that the first information is not used for the positioning integrity of the UE comprises: the DNU indication indicating that the UE does not use the assistance information to measure a PRS for the positioning integrity, and/or the DNU indication indicating that the UE does not use a measurement result obtained by measuring a PRS using the assistance information for the positioning integrity.

5. The method of any of claims 2-4, further comprising:
receiving second information sent by a base station (gNB), wherein the second information is used by the LMF to determine the DNU indication.

6. The method of claim 5, wherein before receiving the second information sent by the base station, the method comprises:
sending a first request to the base station, wherein the first request is used to request the second information.

7. The method of any of claims 2-6, further comprising:
receiving first capability information sent by the UE, wherein the first capability information indicates a capability of supporting the DNU indication for the assistance information.

8. The method of claim 1, wherein the first node is the UE or a base station, the second node is an LMF, and the first information comprises: a measurement result and/or information related to the base station.

9. The method of claim 8, wherein the first node is the UE, and the measurement result comprises at least one of:
a reference signal time difference (RSTD);
a reference signal receiving power (RSRP);
a reference signal receiving power path (RSRPP); or
a UE transmit-receive (Rx-Tx) time difference.

10. The method of claim 9, wherein
the DNU indication indicating that the first information is used for the UE positioning comprises: the DNU indication indicating that the measurement result is used to determine a location of the UE; or the DNU indication indicating that the first information is not used for the UE positioning comprises: the DNU indication indicating that the measurement result is not used to determine a location of the UE; and/or
the DNU indication indicating that the first information is used for the positioning integrity of the UE comprises: the DNU indication indicating that the LMF uses the measurement result for the positioning integrity; or the DNU indication indicating that the first information is not used for the positioning integrity of the UE comprises: the DNU indication indicating that the LMF does not use the measurement result for the positioning integrity .

11. The method of claim 9 or 10, further comprising:
sending second capability information to the LMF, wherein the second capability information indicates a capability of supporting the DNU indication for the measurement result.

12. The method of claim 8, wherein the first node is a base station;
the measurement result comprises at least one of: a relative time of arrival (RTOA), an angle of arrival (AoA), a zenith angle of arrival (ZoA), or a gNB Rx-Tx time difference;
and/or
the information related to the base station comprises at least one of: a location of a TRP, synchronization information between TRPs, or an antenna location of a TRP.

13. The method of claim 12, wherein
the DNU indication indicating that the first information is used for the UE positioning comprises: the DNU indication indicating that the measurement result is used to determine a location of the UE, and/or the DNU indication indicating that the information related to the base station is used to determine a location of the UE; or the DNU indication indicating that the first information is not used for the UE positioning comprises: the DNU indication indicating that the measurement result is not used to determine a location of the UE, and/or the DNU indication indicating that the information related to the base station is not used to determine a location of the UE; and/or
the DNU indication indicating that the first information is used for the positioning integrity of the UE comprises: the DNU indication indicating that the LMF uses the measurement result for the positioning integrity, and/or the DNU indication indicating that the LMF uses the information related to the base station for the positioning integrity; or the DNU indication indicating that the first information is not used for the positioning integrity of the UE comprises: the DNU indication indicating that the LMF does not use the measurement result for the positioning integrity, and/or the DNU indication indicating that the LMF does not use the information related to the base station for the positioning integrity.

14. The method of claim 12 or 13, further comprising:
sending third capability information to the LMF, wherein the third capability information indicates a capability of supporting the DNU indication for the measurement result, and/or the third capability information indicates a capability of supporting the DNU indication for the information related to the base station.

15. An information processing method, performed by a second node, comprising:
receiving a do-not-use (DNU) indication sent by a first node, wherein the DNU indication indicates at least one of:
first information being used for user equipment (UE) positioning or not used for the UE positioning; or
first information being used for a positioning integrity of a UE or not used for the positioning integrity of the UE.

16. The method of claim 15, wherein the first node is a location management function (LMF), the second node is the UE, and the first information comprises: assistance information.

17. The method of claim 16, wherein the assistance information comprises at least one of:
a location of a transmission reception point (TPR);
synchronization information between TRPs;
a position reference signal (PRS) resource; or
a TRP identifier.

18. The method of claim 16 or 17, wherein
the DNU indication indicating that the first information is used for the UE positioning comprises: the DNU indication indicating that the assistance information is used to measure a PRS, and/or the DNU indication indicating that a measurement result is used to determine a location of the UE, wherein the measurement result is obtained by measuring a PRS using the assistance information; or the DNU indication indicating that the first information is not used for the UE positioning comprises: the DNU indication indicating that the assistance information is not used to measure a PRS, and/or the DNU indication indicating that a measurement result is not used to determine a location of the UE; and/or
the DNU indication indicating that the first information is used for the positioning integrity of the UE comprises: the DNU indication indicating that the UE uses the assistance information to measure a PRS for the positioning integrity, and/or the DNU indication indicating that the UE uses a measurement result obtained by measuring a PRS using the assistance information for the positioning integrity; or the DNU indication indicating that the first information is not used for the positioning integrity of the UE comprises: the DNU indication indicating that the UE does not use the assistance information to measure a PRS for the positioning integrity, and/or the DNU indication indicating that the UE does not use a measurement result obtained by measuring a PRS using the assistance information for the positioning integrity.

19. The method of any of claims 16-18, further comprising:
sending first capability information to an LMF, wherein the first capability information indicates a capability of supporting the DNU indication for the assistance information.

20. The method of any of claims 16-19, further comprising at least one of:
determining, according to the DNU indication, to use a measurement result of a TRP to determine the UE positioning or not to use a measurement result of a TRP to determine the UE positioning;
determining, according to the DNU indication, to use a measurement result of a TRP to determine the positioning integrity of the UE or not to use a measurement result of a TRP to determine the positioning integrity of the UE;
determining, according to the DNU indication, to use a measurement result of a PRS resource to determine a location of the UE or not to use a measurement result of a PRS resource to determine a location of the UE; or
determining, according to the DNU indication, to use a measurement result of a PRS resource to determine the positioning integrity of the UE or not to use a measurement result of a PRS resource to determine the positioning integrity of the UE.

21. The method of claims 16-20, further comprising at least one of:
determining, according to the DNU indication, at least one TRP used for measurement or at least one TRP not used for measurement; or
determining, according to the DNU indication, at least one PRS resource used for measurement or at least one PRS resource not used for measurement.

22. The method of claim 15, wherein the first node is the UE or a base station, the second node is an LMF, and the first information comprises: a measurement result and/or information related to the base station.

23. The method of claim 22, wherein the first node is the UE, and the measurement result comprises at least one of:
a reference signal time difference (RSTD);
a reference signal receiving power (RSRP);
a reference signal receiving power path (RSRPP); or
a UE transmit-receive (Rx-Tx) time difference.

24. The method of claim 23, wherein
the DNU indication indicating that the first information is used for the UE positioning comprises: the DNU indication indicating that the measurement result is used to determine a location of the UE; or the DNU indication indicating that the first information is not used for the UE positioning comprises: the DNU indication indicating that the measurement result is not used to determine a location of the UE; and/or
the DNU indication indicating that the first information is used for the positioning integrity of the UE comprises: the DNU indication indicating that the LMF uses the measurement result for the positioning integrity; or the DNU indication indicating that the first information is not used for the positioning integrity of the UE comprises: the DNU indication indicating that the LMF does not use the measurement result for the positioning integrity.

25. The method of claim 23 or 24, further comprising:
receiving second capability information sent by the UE, wherein the second capability information indicates a capability of supporting the DNU indication for the measurement result.

26. The method of claim 21, wherein the first node is a base station;
the measurement result comprises at least one of: a relative time of arrival (RTOA), an angle of arrival (AoA), a zenith angle of arrival (ZoA), or a gNB Rx-Tx time difference;
and/or
the information related to the base station comprises at least one of: a location of a TRP, synchronization information between TRPs, or an antenna location of a TRP.

27. The method of claim 25, wherein
the DNU indication indicating that the first information is used for the UE positioning comprises: the DNU indication indicating that the measurement result is used to determine a location of the UE, and/or the DNU indication indicating that the information related to the base station is used to determine a location of the UE; or the DNU indication indicating that the first information is not used for the UE positioning comprises: the DNU indication indicating that the measurement result is not used to determine a location of the UE, and/or the DNU indication indicating that the information related to the base station is not used to determine a location of the UE; and/or
the DNU indication indicating that the first information is used for the positioning integrity of the UE comprises: the DNU indication indicating that the LMF uses the measurement result for the positioning integrity, and/or the DNU indication indicating that the LMF uses the information related to the base station for the positioning integrity; or the DNU indication indicating that the first information is not used for the positioning integrity of the UE comprises: the DNU indication indicating that the LMF does not use the measurement result for the positioning integrity, and/or the DNU indication indicating that the LMF does not use the information related to the base station for the positioning integrity.

28. The method of claim 26 or 27, further comprising:
receiving third capability information sent by the base station, wherein the third capability information indicates a capability of supporting the DNU indication for the measurement result, and/or the third capability information indicates a capability of supporting the DNU indication for the information related to the base station.

29. The method of any of claims 26-28, further comprising at least one of:
determining, according to the DNU indication, to use at least one measurement result to determine a location of the UE or not to use at least one measurement result to determine a location of the UE;
determining, according to the DNU indication, to use at least one TRP to determine a location of the UE or not to use at least one TRP to determine a location of the UE;
determining, according to the DNU indication, to use at least one measurement result to determine the positioning integrity of the UE or not to use at least one measurement result to determine the positioning integrity of the UE; or
determining, according to the DNU indication, to use at least one TRP to determine the positioning integrity of the UE or not to use at least one TRP to determine the positioning integrity of the UE.

30. An information processing method, performed by a base station, comprising:
sending second information to a location management function (LMF), wherein the second information is used by the LMF to determine a do-not-use (DNU) indication, and the DNU indication indicates at least one of:
first information being used for user equipment (UE) positioning or not used for the UE positioning; or
first information being used for a positioning integrity of a UE or not used for the positioning integrity of the UE.

31. The method of claim 30, wherein before sending the second information to the LMF, the method comprises:
receiving a first request sent by the LMF, wherein the first request is used to request the second information.

32. A first information processing apparatus, comprising:
a first sending module, configured to send a do-not-use (DNU) indication to a second node, wherein the DNU indication indicates at least one of:
first information being used for user equipment (UE) positioning or not used for the UE positioning; or
first information being used for a positioning integrity of a UE or not used for the positioning integrity of the UE.

33. A second information processing apparatus, comprising:
a second receiving module, configured to receive a do-not-use (DNU) indication sent by a first node, wherein the DNU indication indicates at least one of:
first information being used for user equipment (UE) positioning or not used for the UE positioning; or
first information being used for a positioning integrity of a UE or not used for the positioning integrity of the UE.

34. A third information processing apparatus, comprising:
a third sending module, configured to send second information to a location management function (LMF), wherein the second information is used by the LMF to determine a do-not-use (DNU) indication, and the DNU indication indicates at least one of:
first information being used for user equipment (UE) positioning or not used for the UE positioning; or
first information being used for a positioning integrity of a UE or not used for the positioning integrity of the UE.

35. A communication device, comprising a processor, a transceiver, a memory and an executable program stored on the memory and executable by the processor, wherein the processor executes the executable program to perform the method of any one of claims 1-14, or any one of claims 15-29, or any one of claims 30 to 31.

36. A computer storage medium for storing a program executable by a processor, wherein after the program is executed by the processor, the method of any one of claims 1-14, or any one of claims 15-29, or any one of claims 30 to 31 is implemented.
